# EUROPEAN PATENT SPECIFICATION

(11) **EP 2 608 306 B1**
(45) Date of publication and mention of the grant of the patent: **11.03.2015**
(21) Application number: 12198003.1
(22) Date of filing: 19.12.2012
(51) Int. Cl.: H01M 8/24, H01M 8/04

(54) **Fuel cell apparatus**
Brennstoffzellensystem
Système de pile à combustible

(30) Priority: 20.12.2011 JP 2011278654
(43) Date of publication of application: 26.06.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Matsuda, Kunio, Kariya-shi, Aichi 448-8650 (JP); Kuwaba, Koichi, Kariya-shi, Aichi 448-8650 (JP); Endo, Satoshi, Kariya-shi, Aichi 448-8650 (JP); Yoshiguchi, Hitoshi, Kariya-shi, Aichi 448-0027 (JP); Nakamura, Mitsuhiro, Kyoto-shi, Kyoto 612-8501 (JP); Ono, Takashi, Kyoto-shi, Kyoto 612-8501 (JP)
(74) Representative: TBK

(56) References cited:
- EP-A1- 1 909 349
- WO-A1-2008/089977
- WO-A1-2010/102815
- US-A1- 2008 044 714

## Description

### TECHNICAL FIELD

The disclosure generally relates to a fuel cell apparatus according to the preamble of claim 1.

### BACKGROUND DISCUSSION

A known fuel cell apparatus disclosed, for example, in JP2004-319462A, JP2005-100942A, and JP2008-66127A includes a reformer reforming source gas (fuel gas) to thereby generate anode gas including hydrogen, a stack (i.e., a fuel cell stack) to which the anode gas generate by the reformer and cathode gas are supplied and which generates electricity by the supplied anode gas and the supplied cathode gas, a heat insulating layer covering an outside of the stack, a cathode gas flow passage through which the cathode gas is supplied to the stack, an exhaust gas flow passage for discharging exhaust gas, which is generated in accordance with a power generating operation of the stack, to an outside of the fuel cell apparatus, and a housing accommodating the reformer, the stack, the heat insulating layer, the cathode gas flow passage, and the exhaust gas flow passage. According to the fuel cell apparatus disclosed in each of JP2004-319462A, JP2005-100942A, and JP2008-66127A, when an inner portion of the housing is heated, a side wall of the housing may be deformed because of thermal expansion thereof. In such case, for example, the side wall is thermally deformed to protrude toward the stack; therefore, the heat insulating layer within the housing is pressured by the side wall. Consequently, the heat insulating layer that is one of internal components within the housing is deformed, therefore reducing a flow passage width of a flow passage which is adjacent to the stack or damaging the flow passage, Additionally, in a case where the stack that is the major internal component within the housing may be deformed or damaged, the cathode gas flow passage and the exhaust gas flow passage are deformed and narrowed because of the deformation of the housing. Consequently, a target value of a flow rate of the cathode gas or the exhaust gas may vary.

WO 2010/102815 A1 shows a generic fuel cell apparatus according to the preamble of claim 1. The fuel cell apparatus comprises a stack to which an anode gas and a cathode gas are supplied and which generates electricity by the supplied anode gas and the supplied cathode gas; a heat insulating layer covering an outside of the stack; a cathode gas flow passage through which the cathode gas is supplied to the stack; an exhaust gas flow passage through which an exhaust gas generated by a power generating operation of the stack is discharged to an outside of the fuel cell apparatus; a housing facing the stack in a state where the heat insulating layer is arranged between the housing and the stack, the housing accommodating the stack, the heat insulating layer, the cathode gas flow passage, and the exhaust gas flow passage and including a side wall and a bottom wall, wherein at least one of the side wall and the bottom wall in a cross section taken along a vertical direction of the housing or a horizontal direction of the housing is formed to be curved outwardly so that an intermediate area at at least one of the side wall and the bottom wall is positioned further away from the stack than both ends of at least one of the side wall and the bottom wall.

### SUMMARY OF THE INVENTION

It is an object of the present invention to further develop a fuel cell apparatus according to the preamble of claim 1 such that strength against structural deformation is improved.

The object of the present invention is achieved by a fuel cell apparatus having the features of claim 1.

Further advantageous developments of the present invention are defined in the dependent claims.

According to the present invention, a fuel cell apparatus includes a stack to which an anode gas and a cathode gas are supplied and which generates electricity by the supplied anode gas and the supplied cathode gas, a heat insulating layer covering an outside of the stack, a cathode gas flow passage through which the cathode gas is supplied to the stack, an exhaust gas flow passage through which an exhaust gas generated by a power generating operation of the stack is discharged to an outside of the fuel cell apparatus, a housing facing the stack in a state where the heat insulating layer is arranged between the housing and the stack, the housing accommodating the stack, the heat insulating layer, the cathode gas flow passage, and the exhaust gas flow passage and including a side wall and a bottom wall, wherein at least one of the side wall and the bottom wall in a cross section taken along a vertical direction of the housing or a horizontal direction of the housing is formed to be curved outwardly so that an intermediate area at at least one of the side wall and the bottom wall is positioned further away from the stack than both ends of at least one of the side wall and the bottom wall.

As described above, the housing accommodates the stack and includes the side wall and the bottom wall. In the cross section taken along the vertical direction of the housing or the horizontal direction of the housing, at least one of the side wall and the bottom wall which configure the housing is formed to be curved outwardly. In other words, the intermediate area at at least one of the side wall and the bottom wall is curved so as to be positioned further away from the stack than the both ends of at least one of the side wall and the bottom wall. For example, an inner portion of the housing is heated when the fuel cell apparatus is in operation. At this time, the side wall and the bottom wall of the housing may be deformed because of thermal expansion to be adjacent to an internal component, for example, the stack within the housing. Even in such case, according to the aforementioned configuration of the housing, the internal component, for example, the stack may be restricted from being pressured, deformed, and damaged by the deformation of the side wall and the bottom wall. Prior to assembling of the fuel cell apparatus, the side wall or the bottom wall may be formed to be curved outwardly in advance. Alternatively, at the time of assembling the housing by mounting the side wall and the bottom wall having flat shapes prior to the assembling of the fuel cell apparatus, the side wall or the bottom may be attached to a vertical column or the like so as to be deformed in an outwardly curved shape along a length of the vertical column in a vertical direction thereof.

According to the invention, in a case where a protruding amount of the intermediate area of the side wall or the bottom wall protruding outwardly from an imaginary line in the cross section is defined as a maximum curvature protruding amount 8 and a length of the side wall in the vertical direction or a length of the bottom wall in the horizontal direction is defined as a length, a ratio of the maximum curvature protruding amount δ relative to the length is within a range from 1 × 10⁻⁵ to 1 × 10⁻¹. The imaginary line imaginary connects an inner wall surface at a first area of the side wall and an inner wall surface at a second area of the side wall along the vertical direction or imaginarily connects an inner wall surface at a first area of the bottom wall and an inner wall surface at a second area of the bottom wall along the horizontal direction.

An upper limit of the ratio of the maximum curvature protruding amount δ relative to the length of the side wall or the bottom wall is, for example, a value of 5 × 10⁻² and 1 × 10⁻². A lower limit of the ratio of the maximum curvature protruding amount δ relative to the length of the side wall or the bottom wall is, for example, a value of 5 × 10⁻⁵, 1 × 10⁻⁴, 5 × 10⁻⁴, and 1 × 10⁻³. The upper limit and the lower limit may not be limited to the aforementioned values. In a case where the length of the side wall or the bottom wall ranges from 20 millimeters to 1000 millimeters, the maximum curvature protruding amount δ as an absolute value ranges, for example, from 0.2 millimeters to 100 millimeters, from 0.5 millimeters to 50 millimeters, and from 0.5 millimeters to 30 millimeters. However, the maximum curvature protruding amount δ is not limited to such ranges.

Preferably, the housing includes an outer base plate and an inner base plate facing each other in the cross section. The outer base plate and the inner base plate form one of the cathode gas flow passage and the exhaust gas flow passage. At least one of the outer base plate and the inner base plate includes a single bent pawl or a plurality of bent pawls, the single bent pawl or the plurality of bent pawls being formed at an edge of at least one of the outer base plate and the inner base plate and being bent at at least one of the outer base plate and the inner base plate to define a flow passage width of one of the cathode gas flow passage and the exhaust gas flow passage.

According to the aforementioned configuration, the single bent pawl or the plurality of bent pawls may define the flow passage width of at least one of the cathode gas flow passage and the exhaust gas flow passage. Therefore, even In a case where the housing is thermally expanded, the single bent pawl or the plurality of bent pawls may restrict a flow of the anode gas or the exhaust gas from being disturbed by the thermal deformation of the housing.

Preferably, the housing includes an outer base plate and an inner base plate facing each other in the cross section. The outer base plate and the inner base plate form one of the cathode gas flow passage and the exhaust gas flow passage. At least one of the outer base plate and the inner base plate includes a single bulging protrusion or a plurality of bulging protrusions, the single bulging protrusion or the plurality of bulging protrusions being formed at at least one of the outer base plate and the inner base plate to define a flow passage width of one of the cathode gas flow passage and the exhaust gas flow passage.

According to the aforementioned configuration, the single bulging protrusion or the plurality of bulging protrusions may define the flow passage width of at least one of the cathode gas flow passage and the exhaust gas flow passage. Therefore, even in a case where the housing is thermally expanded, the single bulging protrusion or the plurality of bulging protrusions may restrict a flow of the anode gas or the exhaust gas from being disturbed by the thermal deformation of the housing.

Preferably, the housing includes an outer base plate and an inner base plate facing each other in the cross section. The outer base plate and the inner base plate form one of the cathode gas flow passage and the exhaust gas flow passage. At least one of the outer base plate and the Inner base plate Includes a single reinforcement rib formed in a bulging manner or a plurality of reinforcement ribs formed in a bulging manner.

According to the aforementioned configuration, even in a case where the housing is thermally expanded, the outer base plate and the inner base plate may be restricted by the single reinforcement rib or the plurality of reinforcement ribs from being unnecessarily deformed. In addition, the single reinforcement rib or the plurality of reinforcement ribs may define the flow passage width of at least one of the cathode gas flow passage and the exhaust gas flow passage. Therefore, even in a case where the hosing is thermally expanded, the single reinforcement rib or the plurality of reinforcement ribs may restrict the flow of the anode gas or the exhaust gas from being disturbed by the thermal deformation of the housing.

Preferably, the housing includes an outer base plate, an intermediate base plate, and an inner base plate facing one another in the cross section. The outer base plate and the intermediate base plate form one of the cathode gas flow passage and the exhaust gas flow passage and the inner base plate and the intermediate base plate form the other of the cathode gas flow passage and the exhaust gas flow passage. At least one of the outer base plate, the intermediate base plate, and the inner base plate includes a single bent pawl or a plurality of bent pawls, the single bent pawl or the plurality of bent pawls being formed at an edge of at least one of the outer base plate, the intermediate base plate, and the inner base plate and being bent at at least one of the outer base plate, the intermediate base plate, and the inner base plate to define a flow passage width of one of the cathode gas flow passage and the exhaust gas flow passage.

According to the aforementioned configuration, the single bent pawl or the plurality of bent pawls may define the flow passage width of at least one of the cathode gas flow passage and the exhaust gas flow passage. Therefore, even in a case where the housing is thermally expanded, the single bent pawl or the plurality of bent pawls may restrict a flow of the anode gas or the exhaust gas from being disturbed by the thermal deformation of the housing.

Preferably, the bent pawl in the cross section includes at least one of an L-shape, a U-shape opened horizontally, an O-shape, a C-shape, an M-shape, an N-shape, a P-shape, a W-shape, a V-shape, a reversed shape of one of the L-shape, the U-shape opened horizontally, the O-shape, the C-shape, the M-shape, the N-shape, the P-shape, the W-shape, the V-shape, and a shape which resembles one of the L-shape, the U-shape opened horizontally, the O-shape, the C-shape, the M-shape, the N-shape, the P-shape, the W-shape, the V-shape, and the reversed shape of one of the L-shape, the U-shape opened horizontally, the O-shape, the C-shape, the M-shape, the N-shape, the P-shape, the W-shape, the V-shape.

The bent pawl configured as described above may define the flow passage width of at least one of the cathode gas flow passage and the exhaust gas flow passage. Therefore, even in a case where the housing is thermally deformed, the bent pawl may restrict a flow of the anode gas or the exhaust gas from being disturbed by the thermal deformation of the housing.

Preferably, the housing includes an outer base plate, an intermediate base plate, and an Inner base plate facing one another in the cross section. The outer base plate and the intermediate base plate form one of the cathode gas flow passage and the exhaust gas flow passage and the inner base plate and the intermediate base plate form the other of the cathode gas flow passage and the exhaust gas flow passage. At least one of the outer base plate, the intermediate base plate, and the inner base plate includes a single bulging protrusion or a plurality of bulging protrusions, the single bulging protrusion or the plurality of bulging protrusions being formed at at least one of the outer base plate, the Intermediate base plate, and the inner base plate to define a flow passage width of one of the cathode gas flow passage and the exhaust gas flow passage.

According to the aforementioned configuration, the single bulging protrusion or the plurality of bulging protrusions may define the flow passage width of at least one of the cathode gas flow passage and the exhaust gas flow passage. Therefore, even in a case where the housing is thermally deformed, the single bulging protrusion or the plurality of bulging protrusions may restrict the flow of the anode gas or the exhaust gas from being disturbed by the thermal deformation of the housing.

Preferably, the housing includes an outer base plate, an intermediate base plate, and an Inner base plate facing one another in the cross section. The outer base plate and the intermediate base plate form one of the cathode gas flow passage and the exhaust gas flow passage and the inner base plate and the intermediate base plate form the other of the cathode gas flow passage and the exhaust gas flow passage. At least one of the outer base plate, the intermediate base plate, and the inner base plate includes a single reinforcement rib formed in a bulging manner or a plurality of reinforcement ribs formed in a bulging manner.

According to the aforementioned configuration, even in a case where the housing is thermally expanded, the outer base plate and the inner base plate may be restricted by the single reinforcement rib or the plurality of reinforcement ribs from being unnecessarily deformed. In addition, the single reinforcement rib or the plurality of reinforcement ribs may define the flow passage width of at least one of the cathode gas flow passage and the exhaust gas flow passage. Therefore, even in a case where the hosing is thermally deformed, the single reinforcement rib or the plurality of reinforcement ribs may restrict the flow of the anode gas or the exhaust gas from being disturbed by the thermal deformation of the housing.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a vertical cross-sectional view schematically illustrating a fuel cell apparatus according to a first embodiment disclosed here;
Fig. 2 is a vertical cross-sectional view schematically illustrating the fuel cell apparatus according to a second embodiment disclosed here;
Fig. 3 is a vertical cross-sectional view schematically illustrating a housing of the fuel cell apparatus according to the second embodiment disclosed here;
Fig. 4 is a perspective view schematically illustrating a process to assemble the housing of the fuel cell apparatus according to the second embodiment disclosed here;
Fig. 5 illustrates a state before a bent pawl is formed at a second side wall of an intermediate base plate;
Fig. 6 illustrates a state after the bent pawl is formed at the second side wall of the intermediate base plate;
Fig. 7 illustrates a state before a bent pawl is formed at a third side wall of an inner base plate;
Fig. 8 illustrates a state after the bent pawl is formed at the third side wall of the inner base plate;
Fig. 9 is a vertical cross-sectional view illustrating a connected state among an outer base plate, the intermediate base plate, and the inner base plate of the housing of the fuel cell apparatus according to a third embodiment;
Fig. 10 is a perspective view schematically illustrating a process to assemble the housing of the fuel cell apparatus according to a fourth embodiment disclosed here;
Fig. 11 is a vertical cross-sectional view schematically illustrating the fuel cell apparatus according to a fifth embodiment;
Fig. 12 is a perspective view schematically illustrating a process to assemble the housing of the fuel cell apparatus according to the fifth embodiment disclosed here;
Fig. 13A is a cross-sectional view schematically illustrating an example of the bent pawl according to a sixth embodiment;
Fig. 13B is a cross-sectional view schematically illustrating an example of the bent pawl according to the sixth embodiment;
Fig. 13C is a cross-sectional view schematically illustrating an example of the bent pawl according to the sixth embodiment;
Fig. 13D is a cross-sectional view schematically illustrating an example of the bent pawl according to the sixth embodiment;
Fig. 13E is a cross-sectional view schematically illustrating an example of the bent pawl according to the sixth embodiment;
Fig. 13F is a cross-sectional view schematically illustrating an example of the bent pawl according to the sixth embodiment;
Fig. 13G is a cross-sectional view schematically illustrating an example of the bent pawl according to the sixth embodiment;
Fig. 13H is a cross-sectional view schematically illustrating an example of the bent pawl according to the sixth embodiment;
Fig. 13I is a cross-sectional view schematically Illustrating an example of the bent pawl according to the sixth embodiment;
Fig. 13J is a cross-sectional view schematically illustrating an example of the bent pawl according to the sixth embodiment;
Fig. 13K is a cross-sectional view schematically illustrating an example of the bent pawl according to the sixth embodiment;
Fig. 14 is a perspective view schematically illustrating a process to assemble the housing of the fuel cell apparatus according to a seventh embodiment disclosed here;
Fig. 15 is a vertical cross-sectional view schematically illustrating the fuel cell apparatus according to an eighth embodiment disclosed here; and
Fig. 16 is a conceptual perspective view schematically illustrating the outer base plate of the housing of the fuel cell apparatus according to a ninth embodiment.

### DETAILED DESCRIPTION

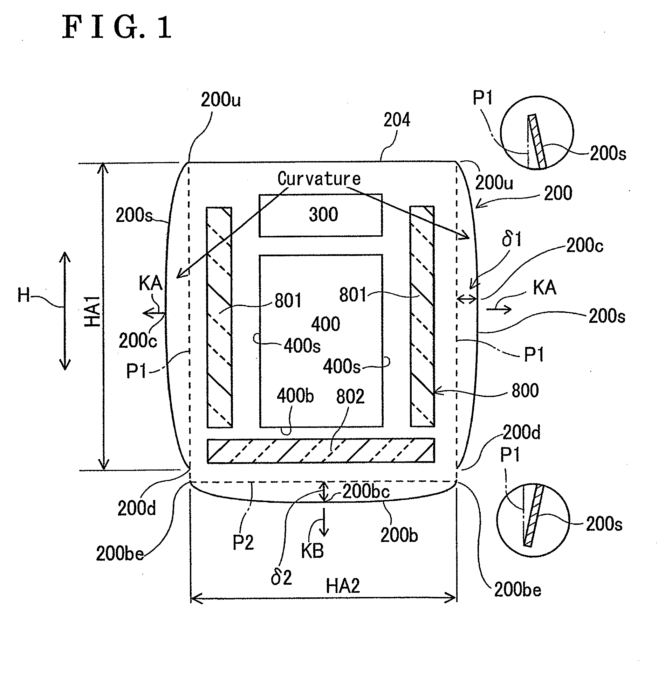

[First embodiment] A first embodiment of this disclosure will be described as follows with reference to Fig. 1 illustrating a fuel cell apparatus taken along a vertical direction thereof (the vertical direction is indicated by an arrow H and will be hereinafter referred to as a vertical direction H). The fuel cell apparatus according to the first embodiment is a solid oxide fuel cell (SOFC), As illustrated in Fig. 1, the fuel cell apparatus includes a reformer 300, a stack 400 (i.e., a fuel cell stack) of a fuel cell, a heat insulating layer 800, a cathode gas flow passage, an exhaust gas flow passage, and a housing 200. The reformer 300 generates anode gas by reforming source gas (i.e., fuel ges). The anode gas generated by the reformer 300 includes hydrogen. The anode gas generated by the reformer 300 and cathode gas are supplied to the stack 400; therefore, the stack 400 generates electricity. The heat insulating layer 800 includes heat insulating side layers 801 and a heat insulating bottom layer 802. The heat insulating side layers 801 and the heat insulating bottom layer 802 are formed by a heat insulating material covering an outside of the stack 400. The cathode gas (i.e., a gas including oxidant) that is air is supplied from the cathode gas flow passage to a cathode (an oxidant pole). A hot exhaust gas generated by a power generating operation of the stack 400 is discharged from the housing 200 via the exhaust gas flow passage to an outside of the housing 200.

As illustrated in Fig. 1, the housing 200 accommodates the reformer 300, the stack 400, the heat insulating layer 800, the cathode gas flow passage, and the exhaust gas flow passage. The housing 200 includes side walls 200s, a bottom wall 200b, and a first closing member 201 for closing an upper portion of the housing 200. The side walls 200s face side surfaces 400s of the stack 400 in a state where the heat insulating side layers 801 are arranged between the side walls 200s and the side surfaces 400s. The bottom wall 200b faces a bottom surface 400b of the stack 400 in a state where the heat insulating bottom layer 802 is arranged between the bottom wall 200b and the bottom surface 400b. Although not shown in Fig. 1, the housing 200 includes side walls provided at a front side in Fig. 1 and at a position opposite from the front side in a direction perpendicular to a horizontal direction in Fig. 1.

As illustrated in Fig. 1, each of the side walls 200s is formed to be curved outwardly in a direction indicated by an arrow KA (the direction will be hereinafter referred to as a direction KA). In particular, an intermediate area 200c at the side wall 200s is curved so as to be further away from the stack 400 than upper and lower edges 200u and 200d that correspond to both ends of the side wall 200s in the vertical direction H.

The bottom wall 200b is formed to be curved outwardly (downwardly) in a direction indicated by an arrow KB in Fig. 1 (the direction will be hereinafter referred to as a direction KB). In particular, an intermediate area 200bc at the bottom wall 200b is curved so as to be further away from the stack 400 than both ends 200be of the bottom wall 200b in the horizontal direction. Curvature of each of the side wall 200s and the bottom wall 200b may be selectively determined depending on a type of the fuel cell apparatus, an operating temperature of the stack 400, or the like. Each of the side wall 200s and the bottom wall 200b may be formed to have curvature to an extent that may be or may not be visually confirmed by a user.

Prior to assembling of the fuel cell apparatus, it is appropriate for the side wall 200s or the bottom wall 200b to be formed to be curved outwardly in advance. Such forming of the side wall 200s or the bottom wall 200b may be generally conducted by pressure forming with a press forming mold. The pressure forming may be hot forming, warm forming, or cold forming. According to the first embodiment, even in a case where an inner portion of the housing 200 is heated when the fuel cell apparatus is in operation, or even in a case where the housing 200 is thermally expanded and deformed when the fuel cell apparatus is in operation, the side wall 200s and the bottom wall 200b are restricted from being deformed to be excessively close to an internal component, for example, the stack 400 within the housing 200. Consequently, the internal component, for example, the stack 400 within the housing 200 is restricted from being deformed or damaged by the side wall 200s or the bottom wall 200b that is thermally deformed.

As shown in Fig. 1 illustrating the vertical-cross sectional view of the housing 200, for example, in a case where a protruding amount of the intermediate area 200c of the side wall 200s protruding outwardly from an imaginary line P1 in the direction KA is defined as a maximum curvature protruding amount δ 1 (maximum curvature protruding amount δ) and a length of the side wall 200s in the vertical direction H is defined as a length HA1, a ratio of the maximum curvature protruding amount δ 1 relative to the length HA1 is within a range from 1 × 10⁻⁵ to 1 × 10⁻¹. The imaginary line P1 is a line imaginarily connecting an inner wall surface at an upper edge area (a first area) of the side wall 200s and an inner wall surface at a lower edge area (a second area) of the side wall 200s substantially along the vertical direction H. In addition, the ratio of the maximum curvature protruding amount δ 1 relative to the length HA1 may be a different value. In the first embodiment, the length HA1 ranges, for example, from 200 millimeters to 1000 millimeters; however, the length HA1 is not limited to such range. Moreover, the curvature of the side wall 200s and the curvature of the bottom wall 200b are exaggeratingly shown in Fig. 1 so as to be easily understood.

As illustrated in Fig. 1, for example, in a case where a protruding amount of the intermediate area 200bc of the bottom wall 200b from an imaginary line P2 in the horizontal direction is defined as a maximum curvature protruding amount δ 2 (maximum curvature protruding amount δ) and a length of the bottom wall 200b in the horizontal direction is defined as a length HA2, a ratio of the maximum curvature protruding amount δ 2 relative to the length HA2 is within a range from 1 × 10⁻⁵ to 1 × 10⁻¹. The imaginary line P2 is a line imaginarily connecting inner wall surfaces (at the first and second areas) at the side ends 200be of the bottom wall 200b substantially along the horizontal direction. In addition, the ratio of the maximum curvature protruding amount δ 2 relative to the length HA2 may be a different value. In the first embodiment, the length HA2 ranges, for example, from 100 millimeters to 1000 millimeters; however, the length HA2 is not limited to such range.

At the timing of the assembling of the fuel cell apparatus, the side wall 200s and the bottom wall 200b are formed to be curved outwardly in advance. Stress, for example, residual stress is generated during the forming of the side wall 200s and the bottom wall 200b. It is appropriate for the stress to be released prior to the assembling of the fuel cell apparatus. In order to release the stress prior to the assembling of the fuel cell apparatus, the side wall 200s and the bottom wall 200b may be annealed as required. In such case, the side wall 200s and the bottom wall 200b may be set in a heat treat furnace to be annealed for a predetermined period of time (for example, for a time range between 2 minutes and 60 minutes depending on a heat treatment temperature). A temperature between 250°C and 600°C is appropriate as the heat treatment temperature. In a case where the side wall 200s and the bottom wall 200b are made of metal, a temperature below an A1 transformation temperature is appropriate as the heat treatment temperature. A non-oxidizing atmosphere, for example, a vacuum atmosphere, a reducing atmosphere, an argon gas atmosphere, or the like is appropriate as an atmosphere for heat treatment. In a case where the heat treatment temperature is low, the atmosphere for heat treatment may be an air atmosphere. It is not necessary for the side wall 200s and the bottom wall 200b to be annealed if not required.

According to the first embodiment, the side wall 200s is configured so that the intermediate area 200c in the vertical direction H is curved to protrude outwardly in the direction KA. In such case, the side wall 200s may be defined continuously by a cross section identical to the cross section of Fig. 1 in a longitudinal direction perpendicular to the horizontal direction. Alternatively, the side wall 200s may be formed so that an intermediate area in the longitudinal direction is curved to protrude further outwardly in the direction KA than edge areas in the longitudinal direction. In such case, the intermediate area in both the vertical direction H and the longitudinal direction protrude maximally outwardly in the direction KA.

In addition, according to the first embodiment, the reformer 300 is set within the housing 200. Alternatively, the reformer 300 may be set at the outside of the housing 200. Moreover, according to the first embodiment, the anode gas is supplied via the reformer 300 to the stack 400. Alternatively, hydrogen gas may be directly supplied to the stack 400 while the anode gas is not supplied to the stack 400.

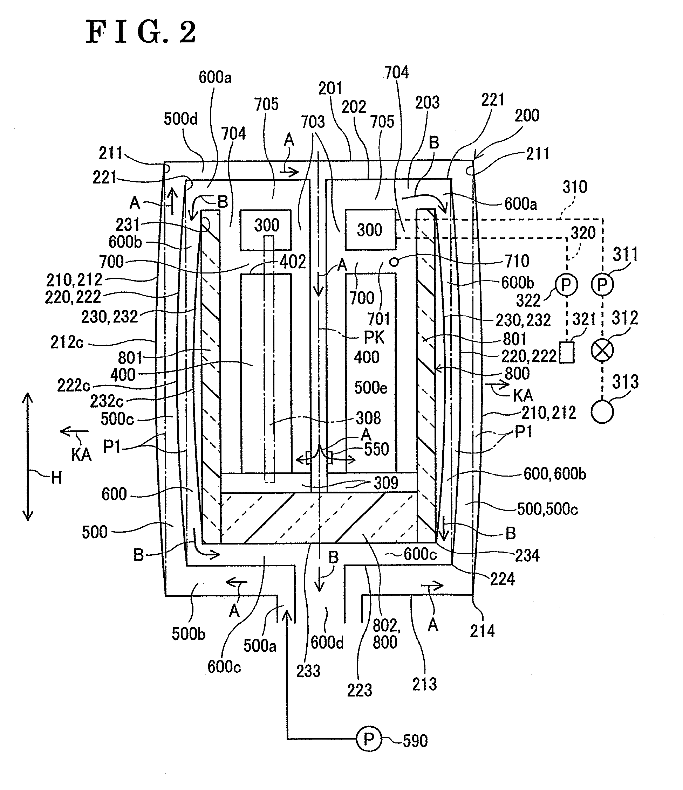

[Second embodiment] A second embodiment of the disclosure will be explained as follows with reference to Figs. 2 to 8 The fuel cell apparatus according to the second embodiment basically includes a function and effects similar to those of the fuel cell apparatus according to the first embodiment. As illustrated In Fig. 2, the fuel cell apparatus according to the second embodiment includes the housing 200 made of metal, the reformers 300, the stacks 400, a cathode gas flow passage 500, and an exhaust gas flow passage 600. The housing 200 includes a generator room 203, the first closing member 201 for closing an upper portion of the generator room 203, and a second closing member 202. The reformers 300 arranged in the generator room 203 reform source gas (i.e., fuel gas) by water vapor to thereby generate anode gas mainly including hydrogen (the molar concentration of hydrogen within the anode gas is 40% or higher). The anode gas generated by the reformers 300 and cathode gas are supplied to the stacks 400 arranged in the generator room 203; thereby, the stacks 400 generate electricity. The cathode gas flow passage 500 is arranged in the housing 200. The cathode gas is supplied via the cathode gas flow passage 500 to the stacks 400. The exhaust gas flow passage 600 is arranged in the housing 200. Exhaust gas generated from the generator room 203 is discharged therefrom through the exhaust gas flow passage 600 to the outside of the housing 200.

According to the second embodiment, each of the stacks 400 is a solid oxide fuel cell (SOFC). The stack 400 includes a ceramic anode, a ceramic electrolyte film, and a ceramic cathode. A fuel gas flow passage 310 is provided so as to supply the source gas of hydrocarbon to the reformers 300. The fuel gas flow passage 310 is connected via a pump 311 and a valve 312 to a gas source 313. A water supply flow passage 320 is provided so as to supply water in a liquid phase to an evaporator of each of the reformers 300 in order to generate water vapor for reforming the source gas. The water supply flow passage 320 is connected via a pump 322 to a tank 321 storing the water used for reforming the source gas. The water stored In the tank 321 is supplied by the pump 322 to the evaporator of the reformer 300.

As illustrated in Fig. 2, the reformer 300 integrally including the evaporator is arranged at an upper side of the stack 400 so as to be positioned at an upper side of the generator room 203. Combustion portions 700 are arranged in the generator room 203. Each of the combustion portions 700 is arranged between the stack 400 and the reformer 300. The combustion portion 700 heats the reformer 300 by combustion of combustible gas so that the reformer 300 is suitable for a steam-reforming reaction (that is generally an endoergic reaction). The combustible gas consists of anode-off gas and/or the source gas discharged from an upper surface 402 of the stack 400.

The anode-off gas is a gas discharged from the anode of the stack 400. The anode-off gas includes an unreacted hydrogen (i.e., hydrogen that is not consumed in a power generation reaction in the stack 400), therefore being combustible. As illustrated in Fig. 2, the combustion portion 700 includes a bottom heating space 701 for heating a bottom wall of the reformer 300, a first side heating space 703 for heating a first side wall of the reformer 300, a second side heating space 704 for heating a second side wall of the reformer 300, and an upper heating space 705 for heating an upper wall of the reformer 300. The combustion portion 700 includes an ignition portion 710 igniting the combustible gas when the combustion portion 700 is activated. The anode gas mainly consisting of hydrogen generated in the reformer 300 is supplied through a flow passage 308 and a distribution tank 309 to a lower portion of the anode of the stack 400, thereafter being supplied for the power generation reaction in the stack 400. The heat insulating layer 800 formed by a heat insulating material having high heat insulating properties is arranged in the generator room 203. The generator room 203 is partitioned by the heat insulating layer 800. The heat insulating layer 800 includes the heat insulating side layers 801 and the heat insulating bottom layer 802. Each of the heat insulating side layers 801 is arranged at a side of the stack 400. The heat insulating bottom layer 802 is arranged at a bottom side of the stack 400.

As illustrated in Fig. 2, the cathode gas flow passage 500 functions to convey a relatively low-temperature air supplied from an exterior pump 590 (serving as a conveyance source), to the cathode of the stack 400. The relatively low-temperature air serving as the cathode gas is supplied from the pump 590 to the stack 400. The cathode gas flow passage 500 includes a first cathode gas flow passage 500a having a tubular shape, a second cathode gas flow passage 500b extending along a bottom side of the housing 200, third cathode gas flow passages 500c extending in a vertical direction indicated by an arrow H in Fig. 2 (the vertical direction will be hereinafter referred to as a vertical direction H), a fourth cathode gas flow passage 500d extending along the first closing member 201 and the second closing member 202, and a fifth cathode gas flow passage 500e arranged between the stacks 400 and extending in the vertical direction H. The cathode gas supplied by the pump 590 is discharged through the fifth cathode gas flow passage 500e and an outlet port 550 to a lower portion of the cathode of the stack 400. Outside air flows as the cathode gas from the first cathode gas flow passage 500a, the second cathode gas flow passage 500b, the third cathode gas flow passages 500c, the fourth cathode gas flow passage 500d, and the fifth cathode gas flow passage 500e in the mentioned order (indicated by arrows A in Fig. 2) to the outlet port 550 and is thereafter supplied to the lower portion of the cathode of the stack 400. Then, the outside air serving as the cathode gas is utilized in the power generation reaction in the stack 400.

Meanwhile, the exhaust gas flow passage 600 is a flow passage through which the exhaust gas generated in the generator room 203 is discharged to the outside of the housing 200. The exhaust gas is at high temperature relative to the cathode gas. As illustrated in Fig. 2, the exhaust gas flow passage 600 includes a first exhaust gas flow passage 600a, second exhaust gas flow passages 600b through which the exhaust gas flows downwardly, a third exhaust gas flow passage 600c through which the exhaust gas flows along the bottom side of the housing 200, and a fourth exhaust gas flow passage 600d having a tubular shape. The first exhaust gas flow passage 600a connects to the upper heating space 705 in the generator room 203. The exhaust gas generated in the generator room 203 and at high temperature relative to the cathode gas flows from the first exhaust gas flow passage 600a, the second exhaust gas flow passages 600b, the third exhaust gas flow passage 600c, and the fourth exhaust gas flow passage 600d in the mentioned order (indicated by arrows B in Fig. 2) and is therefore discharged to the outside of the housing 200. The exhaust gas is, for example, the anode-off gas discharged from the anode of the stack 400, a cathode-off gas discharged from the cathode of the stack 400, and a combustion exhaust gas generated after the anode-off gas is combusted in the combustion portion 700.

As illustrated in Fig. 2, the cathode gas flow passage 500 is located exterior in the horizontal direction relative to the exhaust gas flow passage 600. The cathode gas flow passage 500 and the exhaust gas flow passage 600 are arranged next to each other to thereby conduct a thermal exchange. The cathode gas at low temperature relative to the exhaust gas flows in the cathode gas flow passage 500 toward opposite sides along the horizontal direction in the cross section in Fig. 2 and is thus heated by the aforementioned thermal exchange with the exhaust gas flow passage 600. On the other hand, the exhaust gas at high temperature relative to the cathode gas flows in the exhaust gas flow passage 600 and is thus cooled by the thermal exchange with the cathode gas flow passage 500.

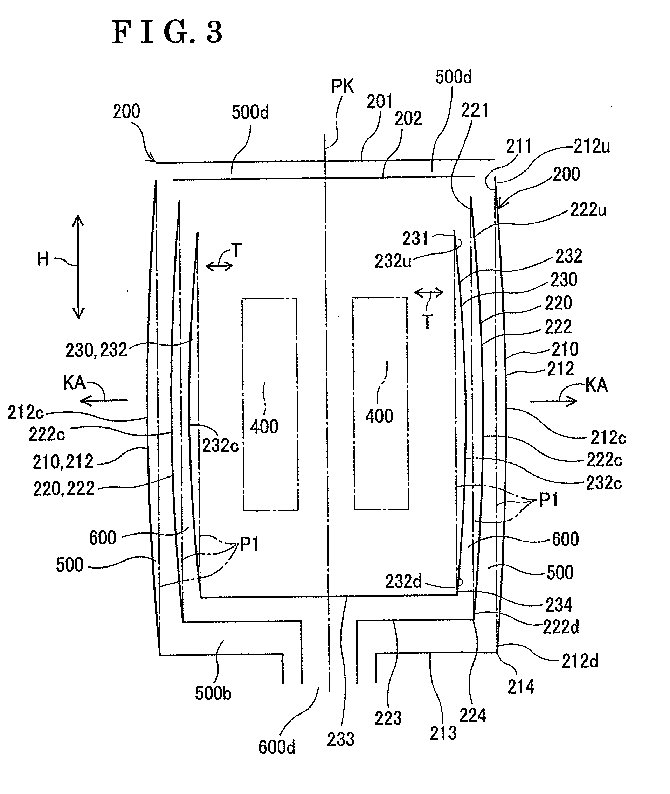

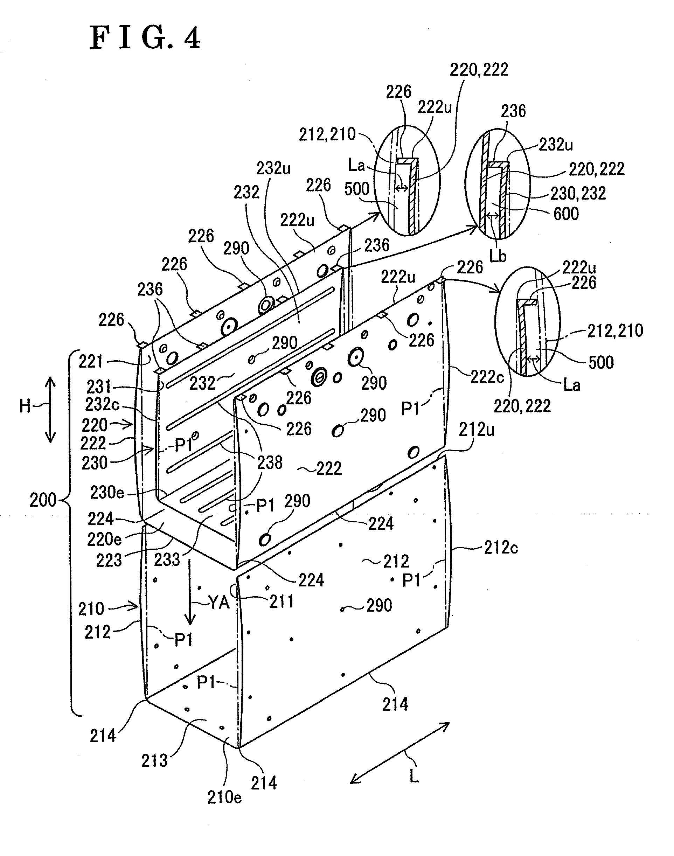

Fig. 3 is a cross-sectional view of the housing 200 taken along vertical and horizontal directions thereof and showing a state where the internal components, for example, the reformers 300 are removed from the housing 200 (the vertical direction is indicated by an arrow H in Fig. 3 and will be referred to as a vertical direction H). As illustrated in Fig. 3, an outer base plate 210 corresponding to an outer member, an intermediate base plate 220 corresponding to an intermediate member, and an inner base plate 230 corresponding to an inner member are assembled to one another to thereby form a main framework of the housing 200. The outer base plate 210 made of metal is formed in a substantially U-shaps, The outer base plate 210 includes a first upper surface opening 211, two first side walls 212 facing each other, a first bottom wall 213 connecting lower portions of the first side walls 212, and first intersection portions 214 at which the first bottom wall 213 intersects with the first side walls 212. The metal of the outer base plate 210 is, for example, carbon steel or alloy steel. Each of the first intersection portions 214 serves as an edge line extending in a longitudinal direction indicated by an arrow L in Fig. 4 (the longitudinal direction indicated by the arrow L corresponds to a longitudinal direction of the housing 200 and will be hereinafter referred to as a longitudinal direction L). The first intersection portion 214 functions as a reinforcement rib increasing bending strength of the outer base plate 210.

As illustrated in Fig. 3, the intermediate base plate 220 made of metal is formed in a substantially U-shape. The intermediate base plate 220 Includes a second upper surface opening 221, two second side walls 222 facing each other, a second bottom wall 223 connecting lower portions of the second side walls 222, and second intersection portions 224 at which the second bottom wall 223 intersects with the second side walls 222. Each of the second intersection portions 224 serves as an edge line extending in the longitudinal direction L. The second intersection portion 224 functions as a reinforcement rib increasing bending strength of the intermediate base plate 220. The inner base plate 230 made of metal is formed in a substantially U-shape. The inner base plate 230 includes a third upper surface opening 231, two third side walls 232 facing each other, a third bottom wall 233 connecting lower portions of the third side walls 232, and third intersection portions 234 at which the third bottom wall 233 intersects with the third side walls 232. Each of the third intersection portions 234 serves as an edge line extending in the longitudinal direction L. The third intersection portion 234 functions as a reinforcement rib increasing bending strength of the inner base plate 230.

As illustrated in Figs. 2 and 3, the outer base plate 210, the intermediate base plate 220, and the inner base plate 230 are connected to one another in an overlapping manner in a thickness direction thereof (the thickness direction is indicated by an arrow T in Fig. 3) by welding or the like in such a way that the first upper surface opening 211, the second upper surface opening 221, and the third upper surface opening 231 are positioned at an upper side of the fuel cell apparatus. Thus, the housing 200 is assembled.

Fig. 4 is a perspective view of the main framework of the housing 200. Fig. 4 illustrates a state where the intermediate base plate 220 and the inner base plate 230 are arranged along the longitudinal direction L while being fitted to each other. Further, Fig. 4 illustrates a state right before the intermediate base plate 220 supporting the inner base plate 230 is moved relative to the outer base plate 210 in a direction indicated by an arrow YA, so as to be fitted to the outer base plate 210. End openings 210e are formed at side ends of the outer base plate 210 In the longitudinal direction L. End openings 220e are formed at side ends of the intermediate base plate 220 in the longitudinal direction L. End openings 230e are formed at side ends of the inner base plate 230 in the longitudinal direction L. Side closing members are attached to the end openings 210e of the outer base plate 210, thereby closing the end openings 210e.

As illustrated in Figs. 2 and 3, the first closing member 201 is connected via a welding portion to an upper portion of the outer base plate 210, thereby closing the first upper surface opening 211 of the outer base plate 210. The second closing member 202 is connected via a welding portion to an upper portion of the intermediate base plate 220, thereby closing the second upper surface opening 221 of the intermediate base plate 220. The first closing member 201 and the second closing member 202 form the fourth cathode gas flow passage 500d.

As illustrated in Fig. 2, the second exhaust gas flow passages 600b and the third exhaust gas flow passage 600c of the exhaust gas flow passage 600 are formed by the inner base plate 230 and the intermediate base plate 220. The second cathode gas flow passage 500b and the third cathode gas flow passages 500c of the cathode gas flow passage 500 are formed by the intermediate base plate 220 and the outer base plate 210.

According to the second embodiment, as illustrated in Fig. 4, plural bulging protrusions 290 are formed at the outer base plate 210, the Intermediate base plate 220, and the inner base plate 230 so as to serve as spacers. The bulging protrusions 290 protrude toward facing or mating members of the outer base plate 210, the intermediate base plate 220, and the Inner base plate 230 to thereby define flow passage widths of the cathode gas flow passage 500 and the exhaust gas flow passage 600. In particular, the plural bulging protrusions 290 protruding toward the facing or mating members and forming dimple shapes recessed outwardly are integrally formed at the outer base plate 210, the intermediate base plate 220, and the inner base plate 230 so as to serve as the spacers. In a shaping process, the bulging protrusions 290 may be integrally formed at the outer base plate 210, the intermediate base plate 220, and the inner base plate 230 by press forming. In order to minimize variations of the flow passage width of the cathode gas flow passage 500 and the exhaust gas flow passage 600, it is appropriate for the plural bulging protrusions 290 to be formed in a dispersed manner.

As illustrated In Fig. 4, plural reinforcement ribs 238 for reinforcing the inner base plate 230 serving as the inner member are arranged at the inner base plate 230 so as to extend in the longitudinal direction L. Even in a case where a thickness of the U-shaped base plate of the inner base plate 230 is reduced in order to reduce a weight thereof, the plural reinforcement ribs 238 may increase the strength of the inner base plate 230 and therefore increase strength of the housing 200. Reinforcement ribs similar to those of the inner base plate 230 may be formed at the outer base plate 210 and the intermediate base plate 220. In addition to the reinforcing function as described above, the reinforcement ribs 238 may appropriately increase an area for thermal exchange between the cathode gas and the anode gas. Further, it is appropriate for the reinforcement ribs 238 and the bulging protrusions 290 to be provided so as not to disturb a gas flow. Furthermore, work hardening of the reinforcement ribs 238 and the bulging protrusions 290 may increase the strength of the inner base plate 230 and the like.

According to the second embodiment, as illustrated in Fig. 4, the outer base plate 210 serving as the outer member of the housing 200 is formed in the U-shape in cross section. The outer base plate 210 includes the first upper surface opening 211. The intermediate base plate 220 serving as the intermediate member of the housing 200 is formed in the U-shape in cross section. The intermediate base plate 220 includes the second upper surface opening 221. The inner base plate 230 serving as the inner member of the housing 200 is formed in the U-shape in cross section. The inner base plate 230 includes the third upper surface opening 231. Therefore, at the time of mounting the internal components, for example, the stacks 400 and the reformers 300 within the outer base plate 210, the intermediate base plate 220, and the Inner base plate 230, the Internal components, for example, the stacks 400 and the reformers 300 may be mounted from the first upper surface opening 211 of the outer base plate 210, or from an end opening of the housing 200, for example, from the end opening 210e of the outer base plate 210 at the side ends in the longitudinal direction L. In the aforementioned mounting process, the internal components may be avoided from making contact with upper walls of the outer base plate 210, the intermediate base plate 220, and the inner base plate 230 because the outer base plate 210, the intermediate base plate 220, and the inner base plate 230 are not originally provided with the upper walls. As a result, the mountablity of the stack 400 or the reformer 300 to be mounted within the U-shaped plate member may be improved in the second embodiment. In addition, according to the second embodiment, as illustrated in Fig. 3, the housing 200 is symmetrically formed relative to a center line PK vertically extending and linearly passing through a central portion of the housing 200. Alternatively, the housing 200 may be shaped in a different manner.

According to the second embodiment, as illustrated in Fig. 3, the outer base plate 210 includes the first side walls 212 each including an upper edge 212u, an intermediate area 212c, and a lower edge 212d in the vertical direction H. The first side wall 212 is formed to be curved in advance in such a way that the intermediate area 212c is further away from the stack 400 than the upper edge 212u and the lower edge 212d (both ends of the first side wall 212) to protrude outwardly in a direction indicated by an arrow KA in Fig. 2 (the direction will be hereinafter referred to as a direction KA). The intermediate base plate 220 includes the second side walls 222 each including an upper edge 222u, an intermediate area 222c, and a lower edge 222d in the vertical direction H. Similarly to the first side wall 212, the second side wall 222 is formed to be curved in advance in a such a way that the intermediate area 222c is further away from the stack 400 than the upper edge 222u and the lower edge 222d (both ends of the second side wall 222) to protrude outwardly in the direction KA.

As illustrated in Figs. 3 and 4, the inner base plate 230 includes the third side walls 232 each including an upper edge 232u, an intermediate area 232c, and a lower edge 232d in the vertical direction H. Similarly to the first side wall 212 and the second side wall 222, the third side wall 232 is formed to be curved in advance in such a way that the intermediate area 232c is further away from the stack 400 than the upper edge 232u and the lower edge 232d (both ends of the third side wall 232) to protrude outwardly in the direction KA.

The inner portion of the housing 200 is maintained at a high temperature when the fuel cell apparatus is in operation; therefore, the housing 200 is thermally expanded. According to the second embodiment, even in a case where the first side wall 212, the second side wall 222, and the third side wall 232 may be excessively deformed because of the thermal expansion to be adjacent to the internal components, for example, the stack 400, the first side wall 212, the second side wall 222, and the third side wall 232 are restricted from being deformed. Thus, even in the case that the first side wall 212, the second side wall 222, and the third side wall 232 are excessively deformed, the internal components, for example, the stack 400 are restricted from being pressured, deformed, and damaged by the first side wall 212, the second side wall 222, and the third side wall 232. As a result, durability of the internal components, for example, the stack 400 may be increased and life spans thereof may be increased. In addition, according to the second embodiment, the excessive deformation of the first side wall 212, the second side wall 222, and the third side wall 232 are restricted as described above; therefore, deformation and strain of the cathode gas flow passage 500 and the exhaust gas flow passage 600 are restricted and flows of the cathode gas and the exhaust gas are maintained In an appropriate manner.

According to the second embodiment, the first side wall 212, the second side wall 222, and the third side wall 232 are formed to be curved outwardly. Alternatively, the second side wall 222 of the intermediate base plate 220 serving as the intermediate member may be formed as a vertically standing wall. This is because the second side wall 222 formed as the vertically standing wall may be deformed in a curved shape in an assembled state as long as the first side wall 212 and the third side wall 232 are curved in the thickness direction T (see Fig. 3) in which the second side wall 222 is sandwiched between the first side wall 212 and the third side wall 232.

Further, according to the second embodiment, as illustrated in Fig. 4, plural bent pawls 226 are formed at the upper edge 222u of each of the second side walls 222 (a length of the second side wall 222 in the vertical direction H is shorter than a length of the first side wall 212 in the vertical direction H) of the intermediate base plate 220 so as to be curved outwardly in substantially L-shapes. The bent pawls 226 are positioned in contact with or adjacent to the first side wall 212 of the outer base plate 210 serving as the outer member, thereby restricting the cathode gas flow passage 500 from being thermally deformed and defining a flow passage width La (see Fig. 4) of the cathode gas flow passage 500.

Furthermore, according to the second embodiment, as illustrated in Fig. 4, plural bent pawls 236 are formed at the upper edge 232u of each of the third side walls 232 (a length of the third side wall 232 in the vertical direction H is shorter than a length of the second side wall 222 in the vertical direction H) of the inner base plate 230 so as to be curved outwardly in substantially L-shapes. The bent pawls 236 are positioned in contact with or adjacent to the second side wall 222 of the intermediate base plate 220 serving as the intermediate member, thereby defining a flow passage width Lb (see Fig. 4) of the exhaust gas flow passage 600 formed by the intermediate base plate 220 and the inner base plate 230. Accordingly, even in a case where the housing 200 is thermally deformed, the deformation of the cathode gas flow passage 500 and the exhaust gas flow passage 600 is restricted. In addition, the flow passage width La of the cathode gas flow passage 500 and the flow passage width Lb of the exhaust gas flow passage 600 are appropriately maintained and desired flow rates of the cathode gas and the exhaust gas may be obtained. In addition, the bent pawls 226 and 236 are formed at intervals In the longitudinal direction L, therefore not disturbing the flows of the cathode gas and the exhaust gas.

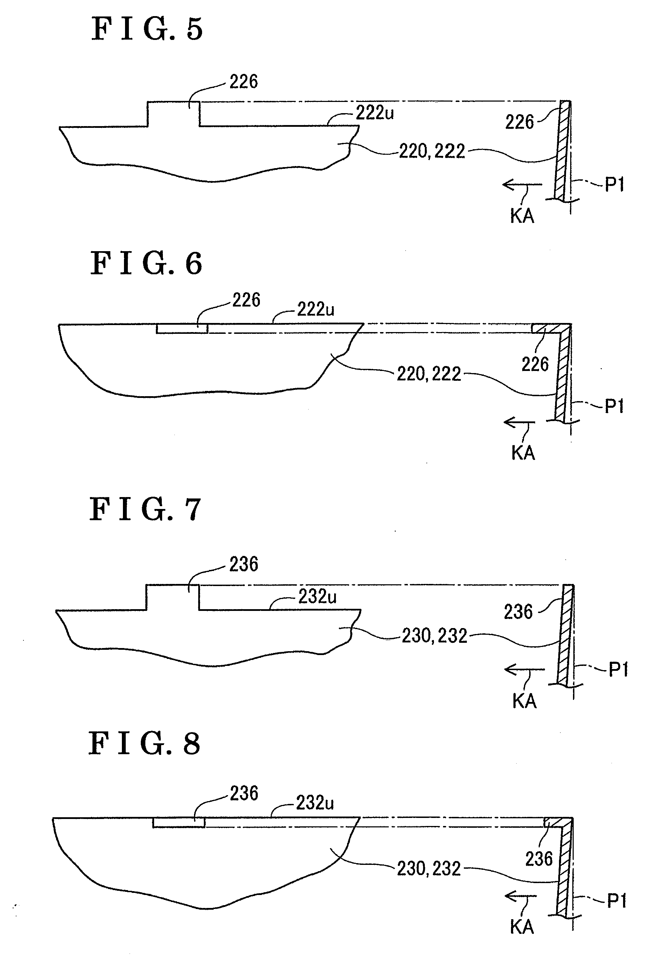

Fig. 5 illustrates a state before the bent pawls 226 are formed at the upper edge 222u of the second side wall 222 of the intermediate base plate 220. Fig. 6 illustrates a state after the bent pawls 226 are formed in the L-shapes at the upper edge 222u of the second side wall 222 of the intermediate base plate 220. Fig. 7 illustrates a state before the bent pawls 236 are formed at the upper edge 232u of the third side wall 232 of the inner base plate 230. Fig. 8 illustrates a state after the bent pawls 236 are formed in the L-shapes at the upper edge 232u of the third side wall 232 of the inner base plate 230. The bent pawls 226 and 236 are bent to protrude in the direction KA (see Figs. 6 and 8) corresponding to a direction in which the intermediate base plate 220 and the inner base plate 230 are curved. Alternatively, the bent pawls 226 and 236 may be bent to protrude in a reversed direction from the direction KA according to circumstances.

The upper edges 222u and 232u are end edges of the second side wall 222 and the third side wall 232 and thus areas thereof are limited. Therefore, a bulging protrusion forming a dimple shape recessed outwardly or a rib may not be easily formed in the limited areas. However, the bent pawls 226 and 236 may be easily formed even at the upper edges 222u and 232u. In addition, the bent pawls 226 and 236 may be formed at side edges of each of the second side wall 222 and the third side wall 232 in the longitudinal direction L. For example, in order to avoid strain of the outer base plate 210, the intermediate base plate 220, and the Inner base plate 230, it is appropriate that the outer base plate 210, the intermediate base plate 220, and the inner base plate 230 are annealed accordingly prior to the assembling of the fuel cell apparatus.

In the second embodiment, at least one of the first bottom wall 213, the second bottom wall 223, and the third bottom wall 233 may be curved to protrude downwardly in the same way as in the first embodiment. According to the second embodiment, as seen in the vertical cross section of Fig. 2, the intermediate area 212c of the first side wall 212 of the outer base plate 210 in the vertical direction H, the intermediate area 222c of the second side wall 222 of the intermediate base plate 220 in the vertical direction H, and the intermediate area 232c of the third side wall 232 of the inner base plate 230 in the vertical direction H are curved to protrude outwardly in the direction KA. In such case, the housing 200 may be defined continuously by a cross section identical to the cross section of Fig. 2 in the longitudinal direction L of the fuel cell apparatus in Fig. 4. Alternatively, an intermediate area in the longitudinal direction L of the fuel cell apparatus in Fig. 4 may be curved to protrude further outwardly in the direction KA than end areas in the longitudinal direction L. In such case, the intermediate areas in both the vertical direction H and the longitudinal direction L protrude maximally outwardly in the direction KA. Likewise, in other embodiments, the intermediate area in both the vertical direction H and the longitudinal direction L may protrude maximally outwardly in the direction KA.

According to the second embodiment, the reformer 300 is set within the housing 200. Alternatively, the reformer 300 may be set at the outside of the housing 200. Moreover, according to the second embodiment, the anode gas is supplied via the reformer 300 to the stack 400. Alternatively, hydrogen gas may be directly supplied to the stack 400.

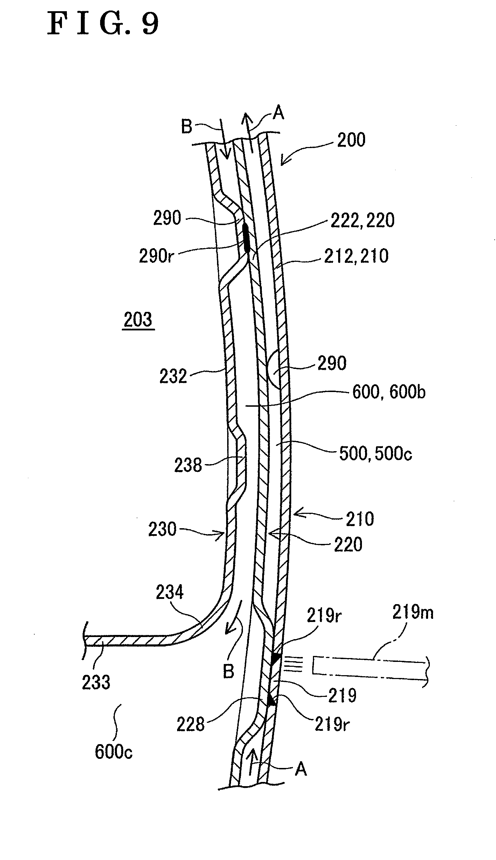

[Third embodiment] A third embodiment of the disclosure will be described as follows with reference to Fig. 9. The fuel cell apparatus according to the third embodiment basically includes a function and effects similar to those of the fuel cell apparatus according to the second embodiment and thus Figs. 2 to 8 may be referred to. According to the third embodiment, as illustrated in Fig. 9, the outer base plate 210, the intermediate base plate 220, and the inner base plate 230 are arranged in an overlapping manner from the outside of the housing 200 to the generator room 203 in the mentioned order. A top surface of the bulging protrusion 290 formed at the inner base plate 230 and having the dimple shape is in contact with the second side wall 222 of the intermediate base plate 220. A welding portion 290r having a nugget shape is formed by spot-welding to thereby connect the inner base plate 230 and the intermediate base plate 220 to each other in such state where the top surface of the bulging protrusion 290 of the inner base plate 230 is in contact with the second side wall 222 of the intermediate base plate 220. Alternatively, the inner base plate 230 and the intermediate base plate 220 may be connected to each other by laser beam welding. Further, as illustrated in Fig. 9, the inner base plate 230 and the intermediate base plate 220 are connected to each other; therefore, a weld electrode may not be inserted in a portion at a lower side of the third bottom wall 233 of the inner base plate 230. Here, according to the third embodiment, a connection hole 219 is formed in the outer base plate 210 so as to penetrate therethrough. A reinforcement rib 228 is formed at the intermediate base plate 220. A welding portion 219r is formed at a peripheral area of the connection hole 219 by a welding tool 219m so as to have a ring shape In a state where the reinforcement rib 228 protruding toward the connection hole 219 is brought in contact with the connection hole 219. Therefore, the outer base plate 210 and the intermediate base plate 220 are connected to each other. Alternatively, the welding portion 219r may be formed at the peripheral area of the connection hole 219 by the welding tool 219m so as to have the ring shape in a state where a top surface of a bulging protrusion formed at the intermediate base plate 220 and having a dimple shape recessed outwardly is brought in contact with the connection hole 219; thereby, the outer base plate 210 and the intermediate base plate 220 are connected to each other. The aforementioned connected configurations between the inner base plate 230 and the intermediate base plate 220 and between the outer base plate 210 and the intermediate base plate 220 may be applied to other embodiment.

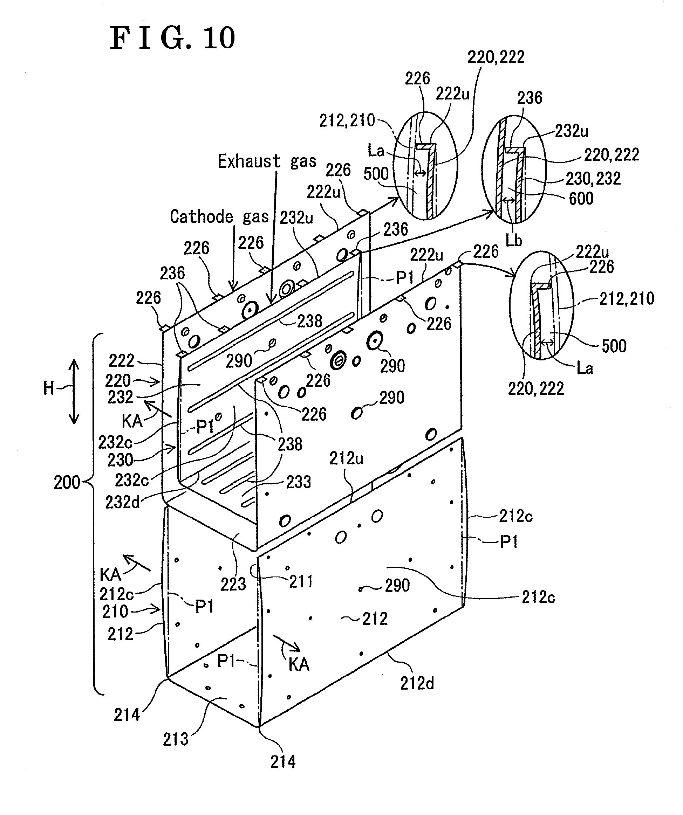

[Fourth embodiment] A fourth embodiment of the disclosure will be described as follows with reference to Fig. 10. The fuel cell apparatus according to the fourth embodiment basically includes a function and effects similar to those of the fuel cell apparatus according to the second and third embodiments. According to the fourth embodiment, In a state prior to the assembling of the fuel cell apparatus, the second side wall 222 of the intermediate base plate 220 is not curved and is formed to extend along a vertical direction indicated by an arrow H in Fig. 10 (the vertical direction will be referred to as a vertical direction H). In a state prior to the assembling of the fuel cell apparatus, the intermediate area 212c of the first side wall 212 of the outer base plate 210 in the vertical direction H is curved to be further away from a stack (i.e., a fuel cell stack) than the upper edge 212u and the lower edge 212d and to protrude outwardly in a direction indicated by an arrow KA (the direction will be referred to as a direction KA). Likewise, the intermediate area 232c of the third side wall 232 of the inner base plate 230 is curved to be further away from the stack than the upper edge 232u and the lower edge 232d and to protrude outwardly in the direction KA.

The inner portion of the housing 200 is maintained at a high temperature when the fuel cell apparatus is in operation; therefore, the housing 200 is thermally expanded. According to the fourth embodiment, even in a case where the first side wall 212, the second side wall 222, and the third side wall 232 are excessively deformed because of the thermal expansion to be adjacent to the internal components, for example, the stack, the internal components, for example, the stack are restricted from being pressured, deformed, and damaged by the first side wall 212, the second side wall 222, and the third side wall 232. As a result, the durability of the internal components, for example, the stack may be increased and the life spans thereof may be increased.

In the fourth embodiment, at least one of the first bottom wall 213, the second bottom wall 223, and the third bottom wall 233 may be curved to protrude downwardly in the same way as In the first embodiment.

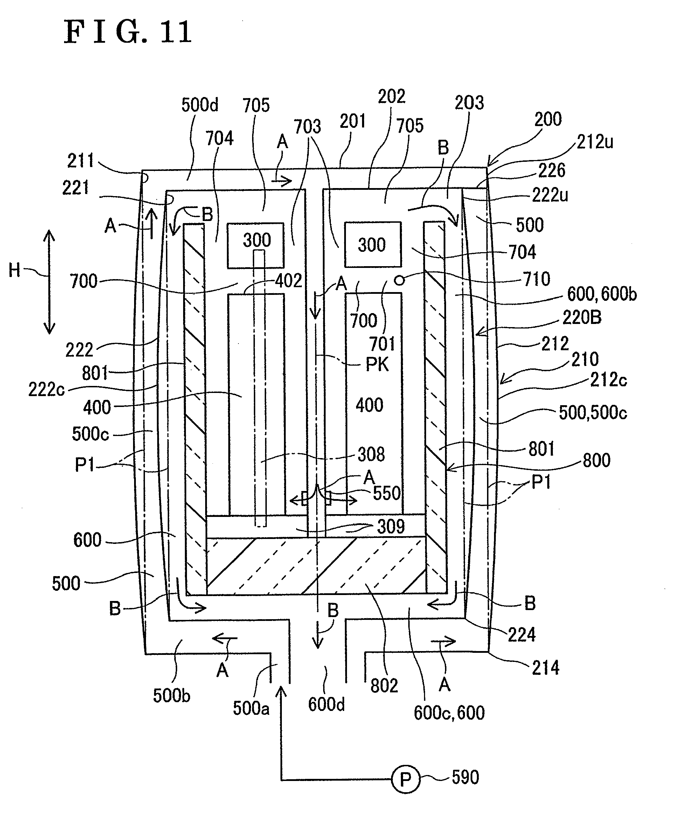

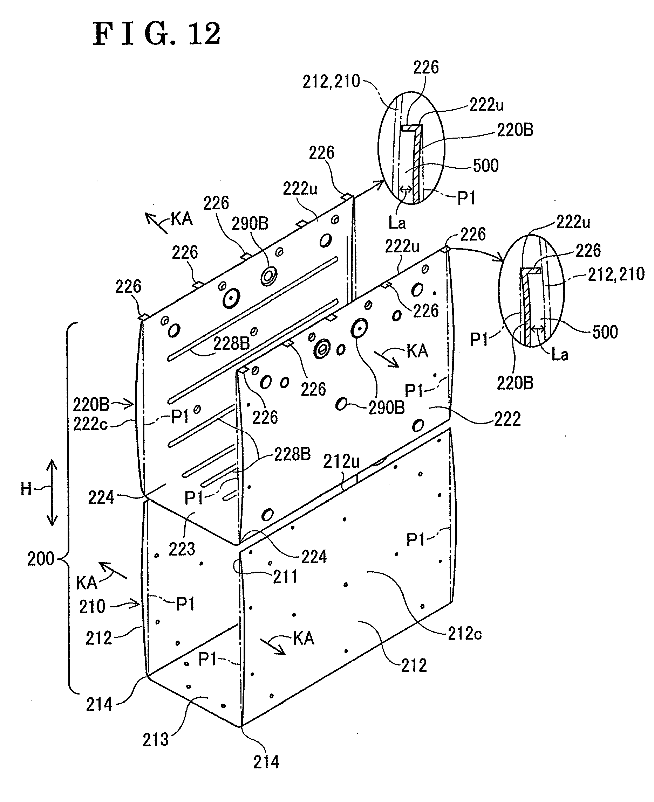

[Fifth embodiment] A fifth embodiment of the disclosure will be described as follows with reference to Figs. 11 and 12. The fuel cell apparatus according to the fifth embodiment basically includes a function and effects similar to those of the fuel cell apparatus according to each of the first, second, third, and fourth embodiments. Differences of the fifth embodiment from the first, second, third, and fourth embodiments will be mainly explained below. As illustrated in Fig. 11, the main framework of the housing 200 includes a double structure instead of a triple structure. The housing 200 includes the outer base plate 210 made of metal and an inner base plate 220B made of metal. The outer base plate 210 and the inner base plate 220B are arranged so as to face each other. The outer base plate 210 and the inner base plate 220B configure the cathode gas flow passage 500. The inner base plate 220B, the heat insulating side layers 801, and the heat insulating bottom layer 802 configure the exhaust gas flow passage 600.

As illustrated in Fig. 12, the plural bent pawls 226 are bent at the upper edges 222u of the inner base plate 220B so as to define a flow passage width of the cathode gas flow passage 500. The bent pawls 226 are bent toward the first side walls 212 of the outer base plate 210, i.e., the bent pawls 226 are bent in the direction KA. The inner base plate 220B includes plural bulging protrusions 290B forming dimple shapes recessed outwardly. The bulging protrusions 290B are formed so as to define the flow passage width of the cathode gas flow passage 500. The inner bass plate 220B includes plural reinforcement ribs 228B formed in a bulging manner. In addition, in the fifth embodiment, at least one of the first bottom wall 213 and the second bottom wall 223 may be curved to protrude downwardly.

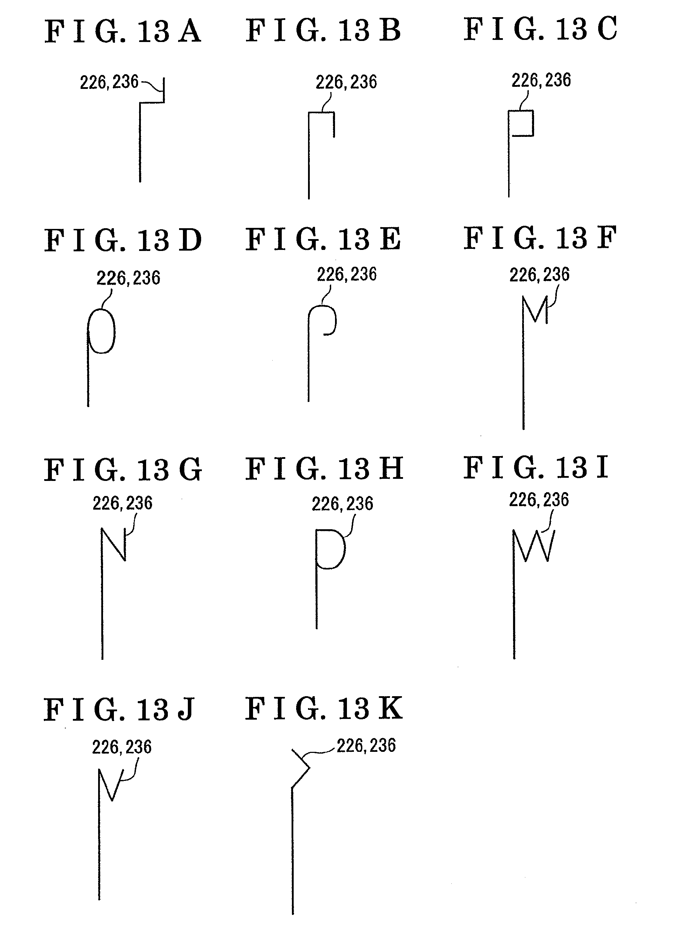

[Sixth embodiment] A sixth embodiment of the disclosure will be described as follows with reference to Figs. 13A to 13K. The fuel cell apparatus according to the sixth embodiment basically includes a function and effects similar to those of the fuel cell apparatus according to the first and second embodiments. Figs. 13A to 13K illustrate examples of cross-sectional shapes of the bent pawls 226 and 236. As illustrated in Fig. 13A, the cross-sectional shape of each of the bent pawls 226 and 236 is an upward L-shape. As illustrated in Fig. 13B, the cross-sectional shape of each of the bent pawls 226 and 236 is a downward L-shape. As illustrated in Fig. 13C, the cross-sectional shape of each of the bent pawls 226 and 236 is a substantially U-shape opened horizontally. As illustrated in Fig. 13D, each of the bent pawls 226 and 236 is curled into a substantially O-shape in cross section. As illustrated in Fig. 13E, each of the bent pawls 226 and 236 is curled into a substantially C-shape in cross section. As illustrated in Fig. 13F, the cross-sectional shape of each of the bent pawls 226 and 236 is an M-shape. As illustrated in Fig. 13G, the cross-sectional shape of each of the bent pawls 226 and 236 is an N-shape. As illustrated in Fig. 13H, the cross-sectional shape of each of the bent pawls 226 and 236 is a P-shape or D-shape. As illustrated in Fig. 13I, the cross-sectional shape of each of the bent pawls 226 and 236 is a W-shape. As illustrated in Fig. 13J, the cross-sectional shape of each of the bent pawls 226 and 236 is a V-shape. As illustrated in Fig. 13K, the cross-sectional shape of each of the bent pawls 226 and 236 is a dog-leg shape. The bent pawls 226 and 236 may be formed by press forming into the cross-sectional shapes in Figs 13A to 13K. The cross-sectional shapes may be reversed vertically or horizontally. Alternatively, each of the bent pawls 226 and 236 may be modified so as to have a cross-sectional shape remarkably resembling one of the L-shape, the downward L-shape, the substantially U-shape opened horizontally, the O-shape, the C-shape, the M-shape, the N-shape, the P-shape or the D-shape, the W-shape, the V-shape, the dog-leg shape, and a shape horizontally or vertically reversed from one of the L-shape, the downward L-shape, the substantially U-shape opened horizontally, the O-shape, the C-shape, the M-shape, the N-shape, the P-shape or the D-shape, the W-shape, the V-shape, and the dog-leg shape as long as a character style.of the cross-sectional shape of each of the modified bent pawls 226 and 236 can be visually confirmed.

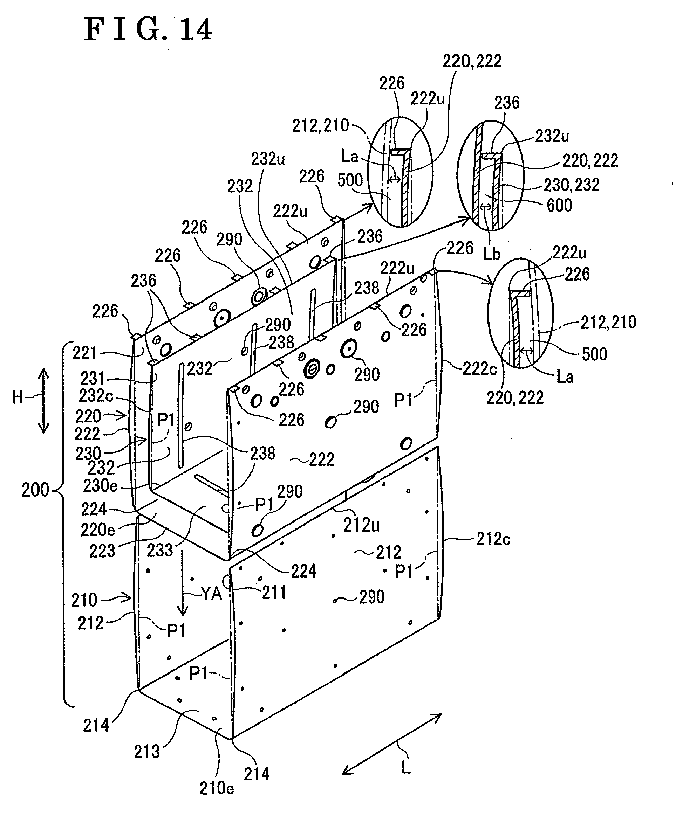

[Seventh embodiment] A seventh embodiment of the disclosure will be described as follows with reference to Fig. 14. The fuel cell apparatus according to the seventh embodiment basically includes a function and effects similar to those of the fuel cell apparatus according to each of the first to sixth embodiments. According to the seventh embodiment, the reinforcement ribs 238 are arranged at the third side wall 232 of the inner base plate 230 so as to extend in a vertical direction indicated by an arrow H in Fig. 14 (i.e., in a vertical direction H). For example, even in a case where the housing 200 is thermally deformed, the reinforcement ribs 238 extending in the vertical direction H may effectively maintain the third side wall 232 in the aforementioned curved manner. Further, the reinforcement ribs 238 extending in the vertical direction H, i.e., along a flow direction of gas, therefore not disturbing the gas flow. The reinforcement ribs 238 are further arranged at the third bottom wall 233 of the inner base plate 230 so as to extend in a direction along which the third bottom wall 233 connects the two third side walls 232. Further, in the seventh embodiment, reinforcement ribs extending in the vertical direction H may be formed at the first side wall 212 of the outer base plate 210 and at the second side wall 222 of the intermediate base plate 220. Furthermore, in the seventh embodiment, at least one of the first bottom wall 213, the second bottom wall 223, and the third bottom wall 233 may be curved to protrude downwardly.

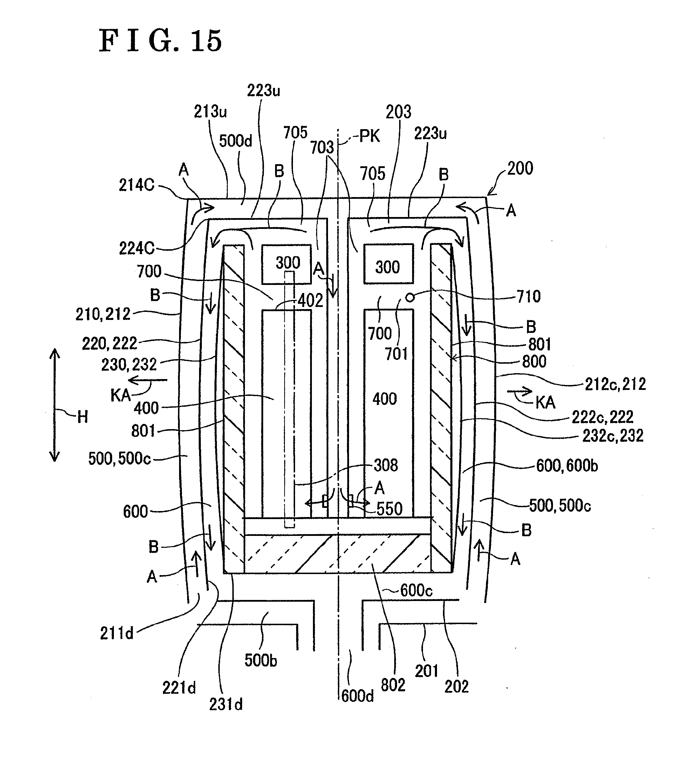

[Eighth embodiment] An eighth embodiment of the disclosure will be described as follows with reference to Fig. 15 illustrating a cross section taken along the vertical direction H and horizontal direction of the housing 200. The fuel cell apparatus according to the eighth embodiment basically includes a function and effects similar to those of the fuel cell apparatus according to each of the first to seventh embodiments. As illustrated in Fig. 15, the fuel cell apparatus according to the eighth embodiment includes the housing 200 made of metal and including the generator room 203, the first closing member 201 for closing a bottom portion of the generator room 203, and the second closing member 202. Fig. 15 illustrates a state before the first closing member 201 and the second closing member 202 are attached to the housing 200. The outer base plate 210 corresponding to the outer member, the intermediate base plate 220 corresponding to the intermediate member, and the inner base plate 230 corresponding to the inner member are assembled to one another to thereby form the main framework of the housing 200. The outer base plate 210 made of metal is formed in a substantially reversed U-shape. The outer base plate 210 includes a first lower surface opening 211d, the two first side walls 212 facing each other, a first upper wall 213u connecting upper portions of the first side walls 212, and first intersection portions 214c.

As illustrated in Fig. 15, the intermediate base plate 220 made of metal is formed in a substantially reversed U-shape. The intermediate base plate 220 includes a second lower surface opening 221d, the two second side walls 222 facing each other, a second upper wall 223u connecting upper portions of the second side walls 222, and second intersection portions 224c. The inner base plate 230 made of metal is formed in a substantially reversed U-shape. The inner base plate 230 includes a third lower surface opening 231d and the two third side walls 232 facing each other.

The outer base plate 210, the intermediate base plate 220, and the inner base plate 230 are connected to one another in an overlapping manner in the thickness direction thereof by welding or the like in such a way that the first lower surface opening 211 d, the second lower surface opening 221d, and the third lower surface opening 231d are positioned at a lower side of the fuel cell apparatus. Thus, the housing 200 is assembled. The intermediate area 212c of the first side wall 212 of the outer base plate 210 in the vertical direction H, the intermediate area 222c of the second side wall 222 of the intermediate base plate 220 in the vertical direction H, and the intermediate area 232c of the third side wall 232 of the inner base plate 230 in the vertical direction H are curved to protrude outwardly in a direction indicated by an arrow KA in Fig. 15, Therefore, for example, the first side wall 212, the second side wall 222, and the third side wall 232 are excessively deformed because of thermal expansion thereof to be excessively close to the internal component, for example, the stack 400 when the fuel cell apparatus is in operation. Even in such case, the excessive deformation of the first side wall 212, the second side wall 222, and the third side wall 232 may be restricted in the eighth embodiment. In addition, even in such case of the excessive deformation of the first side wall 212, the second side wall 222, and the third side wall 232, the internal component, for example, the stack 400 is avoided from being pressured, deformed, and damaged by the first side wall 212, the second side wall 222, and the third side wall 232. In addition, in the eighth embodiment, the reformer 300 is set within the housing 200. Alternatively, the reformer 300 may be set at a different portion of the housing 200. Moreover, according to the eighth embodiment, the anode gas is supplied via the reformer 300 to the stack 400. Alternatively, hydrogen gas may be directly supplied to the stack 400.

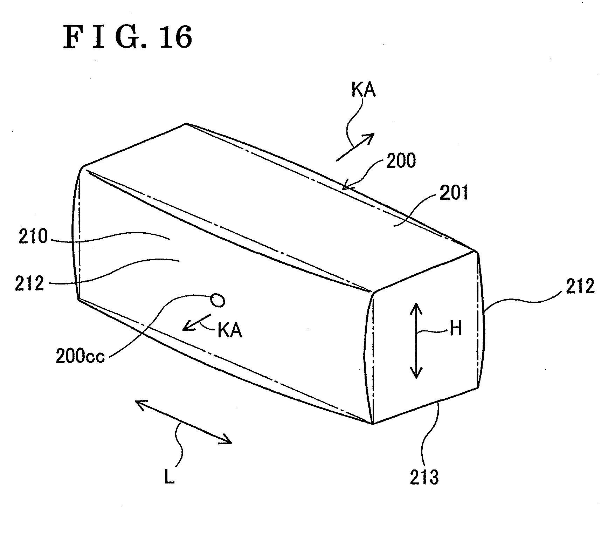

[Ninth embodiment] A ninth embodiment of the disclosure will be described as follows with reference to Fig. 16. The fuel cell apparatus according to the ninth embodiment basically includes a function and effects similar to those of the fuel cell apparatus according to each of the first to eighth embodiments. As illustrated in Fig. 16, the first side walls 212 of the outer base plate 210 define an outer appearance thereof. Each of the first side walls 212 is configured so that an intermediate area in a vertical direction indicated by an arrow H (the vertical direction will be referred to as a vertical direction H) protrudes outwardly in a direction indicated by an arrow KA (the direction will be referred to as a direction KA). In addition, the first side wall 212 is configured so that an intermediate area 200cc in a longitudinal direction indicated by an arrow L (the longitudinal direction corresponds to the longitudinal direction of the housing 200 and will be referred to as a longitudinal direction L) is curved by pressing forming to protrude outwardly in the direction KA. Thus, the intermediate areas in both the vertical direction H and the longitudinal direction L maximally protrude outwardly in the direction KA. Accordingly, when viewed in a cross section taken along the vertical direction H and the horizontal direction of the housing 200, the intermediate area 200cc of the first side wall 212 configuring the housing 200 is curved to be further away from a stack (i.e., a fuel cell stack) than upper and lower ends of the first side wall 212 and to protrude outwardly in the direction KA. The intermediate area 200cc may protrude to an extent that may be visually confirmed or may not be visually confirmed by a user.

The fuel cell apparatus according to a modified example of the aforementioned embodiments basically includes a configuration and effects similar to those of the aforementioned embodiments. According to the aforementioned embodiments, the outer base plate 210, the Intermediate base plate 220, and the inner base plate 230 are curved by press forming to protrude outwardly prior to the assembling of the fuel cell apparatus. Alternatively, according to the modified example, the outer base plate 210, the intermediate base plate 220, and the inner base plate 230 may be flat in a state prior to the assembling of the fuel cell apparatus. For example, in a case where an attachment surface is formed at a vertical column so as to be curved outwardly along a length of the vertical column in a vertical direction thereof, each of the flat outer base plate 210, the flat intermediate base plate 220, and the flat inner base plate 230 is attached to the attachment surface of the vertical column by welding or by an attachment member, for example, a nut. Thus, the flat outer base plate 210, the flat intermediate base plate 220, and the flat inner base plate 230 are mounted to one another; thereby, the housing 200 may be configured. Therefore, the outer base plate 210, the intermediate base plate 220, and the Inner base plate 230 each being originally flat may be curved outwardly. In addition, at least one of the outer base plate 210 and the intermediate base plate 220 may be maintained to be flat without being curved while the inner base plate 230 positioned closest to the stack 400 is curved outwardly.

The fuel cell apparatus according to the aforementioned embodiments may be modified as follows. The stack 400 of the fuel cell apparatus is not limited to a solid oxide fuel cell and may be a solid polymer fuel cell, a phosphoric acid fuel cell, or a molten carbonate fuel cell. The reformer 300 integrally includes the evaporator in the aforementioned embodiments. Alternatively, the reformer 300 and the evaporator may be separate members while being integrated with each other. According to the aforementioned embodiments, the source gas (fuel gas) supplied to the reformer 300 may be, for example, city gas, propane gas, biogas, LPG, CNG, or the like. According to the aforementioned embodiments, the cathode gas flow passage 500 is at an outer side of the exhaust gas flow passage 600. Alternatively, the exhaust gas flow passage 600 may arranged at an outer side of the cathode gas flow passage 500. According to the aforementioned embodiments, each of the outer base plate 210, the intermediate base plate 220, and the inner base plate 230 is formed in the U-shape in cross section so as to include an upper surface opening. Alternatively, each of the outer base plate 210, the intermediate base plate 220, and the inner base plate 230 may be formed in a reversed U-shape. Moreover, flat plates may be assembled by welding or fixing members so as to form a box shape, thereby configuring the housing 200. In other words, the housing 200 may be assembled by means of the flat plates (configuring the outer base plate 210, the intermediate base plate 220, and the inner base plate 230, respectively) as long as side walls or bottom walls configuring the housing 200 are curved outwardly in a state where the housing 200 is in the assembled state.

According to the aforementioned embodiments, the bulging protrusions 290 serving as the spacers are formed at the outer base plate 210, the intermediate base plate 220, and the inner base plate 230. Alternatively, it is not necessary for the bulging protrusions 290 to be formed at the outer base plate 210, the intermediate base plate 220, and the inner base plate 230. Further alternatively, the bulging protrusions 290 may be formed at only one of the outer base plate 210, the intermediate base plate 220, and the inner base plate 230. According to the aforementioned embodiments, the bent pawls 226 and 236 are bent outwardly. Alternatively, the bent pawls 226 and 236 may be bent inwardly. The bent pawls 226 and 236 may be eliminated according to circumstances. In a case where the bent pawls 226 and 236 are eliminated, components corresponding to the bent pawls 226 and 236 may be fixed to at least one of the outer base plate 210, the intermediate base plate 220, and the inner base plate 230 by welding or by bolts or nuts. Bent pawls may be arranged at only one of the outer base plate 210, the intermediate base plate 220, and the inner base plate 230. Each of the aforementioned embodiments may Integrally include characteristics of the modified examples.

A fuel cell apparatus includes a stack (400) generating electricity by an anode gas and a cathode gas, a heat insulating layer (800) covering an outside of the stack (400), a cathode gas flow passage (500), an exhaust gas flow passage (600), a housing (200) facing the stack (400), accommodating the stack (400), the heat insulating layer (800), the cathode gas flow passage (500), and the exhaust gas flow passage (600), and including a side wall (200s, 212, 222, 232) and a bottom wall (200b, 213, 223, 233), wherein at least one of the side wall (200s, 212, 222, 232) and the bottom wall (200b, 213, 223, 233) in a cross section taken along a vertical direction (H) of the housing (200) or a horizontal direction of the housing (200) is formed to be curved outwardly so that an intermediate area (200c, 212c, 222c, 232c, 200bc) at at least one of the side wall (200s, 212, 222, 232) and the bottom wall (200b, 213, 223, 233) is positioned further away from the stack (400) than both ends of at least one of the side wall (200s, 212, 222, 232) and the bottom wall (200b, 213, 223, 233).

## Claims

1. A fuel cell apparatus, comprising:
a stack (400) to which an anode gas and a cathode gas are supplied and which generates electricity by the supplied anode gas and the supplied cathode gas;
a heat insulating layer (800) covering an outside of the stack (400);
a cathode gas flow passage (500) through which the cathode gas is supplied to the stack (400);
an exhaust gas flow passage (600) through which an exhaust gas generated by a power generating operation of the stack (400) is discharged to an outside of the fuel cell apparatus;
a housing (200) facing the stack (400) in a state where the heat insulating layer (800) is arranged between the housing (200) and the stack (400), the housing (200) accommodating the stack (400), the heat insulating layer (800), the cathode gas flow passage (500), and the exhaust gas flow passage (600) and including a side wall (200s, 212, 222, 232) and a bottom wall (200b, 213, 223, 233),
wherein at least one of the side wall (200s, 212, 222, 232) and the bottom wall (200b, 213, 223, 233) in a cross section taken along a vertical direction (H) of the housing (200) or a horizontal direction of the housing (200) is formed to be curved outwardly so that an intermediate area (200c, 212c, 222c, 232c, 200bc) at at least one of the side wall (200s, 212, 222, 232) and the bottom wall (200b, 213, 223, 233) is positioned further away from the stack (400) than both ends of at least one of the side wall (200s, 212, 222, 232) and the bottom wall (200b, 213, 223, 233),
**characterized in that**
in a case where a protruding amount of the intermediate area (200c, 200bc) of the side wall (200s) or the bottom wall (200b) protruding outwardly from an imaginary line (P1, P2) in the cross section is defined as a maximum curvature protruding amount [delta] and a length of the side wall (200s) in the vertical direction (H) or a length of the bottom wall (200b) in the horizontal direction is defined as a length (HA1, HA2), a ratio of the maximum curvature protruding amount [delta] relative to the length (HA1, HA2) is within a range from 1 × 10⁻⁵ to 1 × 10⁻¹, the imaginary line (P1, P2) imaginarily connecting an inner wall surface at a first area of the side wall (200s) and an inner wall surface at a second area of the side wall (200s) along the vertical direction (H) or imaginary connecting an inner wall surface at a first area of the bottom wall (200b) and an inner wall surface at a second area of the bottom wall (200b) along the horizontal direction.

2. The fuel cell apparatus according to claim 1, wherein the housing (200) includes an outer base plate (210) and an inner base plate (220B) facing each other in the cross section,
wherein the outer base plate (210) and the Inner base plate (220B) form one of the cathode gas flow passage (500) and the exhaust gas flow passage (600), and
wherein at least one of the outer base plate (210) and the inner base plate (220B) includes a single bent pawl (226) or a plurality of bent pawls (226), the single bent pawl (226) or the plurality of bent pawls (226) being formed at an edge (212u, 222u) of at least one of the outer base plate (210) and the inner base plate (220B) and being bent at at least one of the outer base plate (210) and the inner base plate (220B) to define a flow passage width of one of the cathode gas flow passage (500) and the exhaust gas flow passage (600).

3. The fuel cell apparatus according to claim 1, wherein the housing (200) includes an outer base plate (210) and an inner base plate (220B) facing each other in the cross section,
wherein the outer base plate (210) and the inner base plate (220B) form one of the cathode gas flow passage (500) and the exhaust gas flow passage (600), and
wherein at least one of the outer base plate (210) and the inner base plate (220B) Includes a single bulging protrusion (290B) or a plurality of bulging protrusions (290B), the single bulging protrusion (290B) or the plurality of bulging protrusions (290B) being formed at at least one of the outer base plate (210) and the inner base plate (220B) to define a flow passage width of one of the cathode gas flow passage (500) and the exhaust gas flow passage (600).

4. The fuel cell apparatus according to claim 1, wherein the housing (200) includes an outer base plate (210) and an inner base plate (220B) facing each other in the cross section,
wherein the outer base plate (210) and the inner base plate (220B) form one of the cathode gas flow passage (600) and the exhaust gas flow passage (600), and
wherein at least one of the outer base plate (210) and the Inner base plate (220B) includes a single reinforcement rib (228B) formed in a bulging manner or a plurality of reinforcement ribs (228B) formed in a bulging manner.

5. The fuel cell apparatus according to claim 1, wherein the housing (200) includes an outer base plate (210), an intermediate base plate (220), and an inner base plate (230) facing one another in the cross section,
wherein the outer base plate (210) and the intermediate base plate (220) form one of the cathode gas flow passage (500) and the exhaust gas flow passage (600) and the inner base plate (230) and the intermediate base plate (220) form the other of the cathode gas flow passage (500) and the exhaust gas flow passage (600), and
wherein at least one of the outer base plate (210), the intermediate base plate (220), and the inner base plate (230) Includes a single bent pawl (226, 236) or a plurality of bent pawls (226, 236), the single bent pawl (226, 236) or the plurality of bent pawls (226, 236) being formed at an edge (212u, 222u, 232u) of at least one of the outer base plate (210), the intermediate base plate (220), and the inner base plate (230) and being bent at at least one of the outer base plate (210), the intermediate base plate (220), and the inner base plate (230) to define a flow passage width (La, Lb) of one of the cathode gas flow passage (500) and the exhaust gas flow passage (600).

6. The fuel cell apparatus according to claim 2 or 5, wherein the bent pawl (226, 236) in the cross section includes at least one of an L-shape, a U-shape opened horizontally, an O-shape, a C-shape, an M-shape, an N-shape, a P-shape, a W-shape, a V-shape, a reversed shape of one of the L-shape, the U-shape opened horizontally, the O-shape, the C-shape, the M-shape, the N-shape, the P-shape, the W-shape, the V-shape, and a shape which resembles one of the L-shape, the U-shape opened horizontally, the O-shape, the C-shape, the M-shape, the N-shape, the P-shape, the W-shape, the V-shape, and the reversed shape of one of the L-shape, the U-shape opened horizontally, the O-shape, the C-shape, the M-shape, the N-shape, the P-shape, the W-shape, the V-shape.

7. The fuel cell apparatus according to claim 1, wherein the housing (200) includes an outer base plate (210), an intermediate base plate (220), and an inner base plate (230) facing one another in the cross section,
wherein the outer base plate (210) and the intermediate base plate (220) form one of the cathode gas flow passage (500) and the exhaust gas flow passage (600) and the inner base plate (230) and the intermediate base plate (220) form the other of the cathode gas flow passage (500) and the exhaust gas flow passage (600), and
wherein at least one of the outer base plate (210), the intermediate base plate (220), and the inner base plate (230) includes a single bulging protrusion (290) or a plurality of bulging protrusions (290), the single bulging protrusion (290) or the plurality of bulging protrusions (290) being formed at at least one of the outer base plate (210), the intermediate base plate (220), and the inner base plate (230) to define a flow passage width (La, Lb) of one of the cathode gas flow passage (500) and the exhaust gas flow passage (600).

8. The fuel cell apparatus according to claim 1, wherein the housing (200) includes an outer base plate (210), an intermediate base plate (220), and an inner base plate (230) facing one another in the cross section,
wherein the outer base plate (210) and the intermediate base plate (220) form one of the cathode gas flow passage (500) and the exhaust gas flow passage (600) and the inner base plate (230) and the intermediate base plate (220) form the other of the cathode gas flow passage (500) and the exhaust gas flow passage (600), and
wherein at least one of the outer base plate (210), the intermediate base plate (220), and the inner base plate (230) includes a single reinforcement rib (228, 238) formed in a bulging manner or a plurality of reinforcement ribs (228, 238) formed in a bulging manner.

## Patentansprüche

1. Brennstoffzellengerät mit:
einem Stapel (400), zu dem ein Anodengas und ein Kathodengas zugeführt werden und der einen elektrischen Strom durch das zugeführte Anodengas und das zugeführte Kathodengas erzeugt;
einer wärmeisolierenden Schicht (800), die eine Außenseite des Stapels (400) abdeckt;
einem Kathodengasströmungsdurchgang (500), durch den das Kathodengas zu dem Stapel (400) zugeführt wird;
einem Abgasströmungsdurchgang (600), durch den ein Abgas, das durch einen Stromerzeugungsbetrieb des Stapels (400) erzeugt wird, zu einer Außenseite des Brennstoffzellengeräts abgegeben wird;
einem Gehäuse (200), das zu dem Stapel (400) in einem Zustand zugewandt ist, in dem die wärmeisolierende Schicht (800) zwischen dem Gehäuse (200) und dem Stapel (400) angeordnet ist, wobei das Gehäuse (200) den Stapel (400), die wärmeisolierende Schicht (800), den Kathodengasströmungsdurchgang (500) und den Abgasströmungsdurchgang (600) aufnimmt und eine Seitenwand (200s, 212, 222, 232) und eine Bodenwand (200b, 213, 223, 233) aufweist,
wobei zumindest eine von der Seitenwand (200s, 212, 222, 232) und der Bodenwand (200b, 213, 223, 233) in einem Querschnitt entlang einer senkrechten Richtung (H) des Gehäuses (200) oder einer waagrechten Richtung des Gehäuses (200) ausgebildet ist, um nach außen gekrümmt zu sein, so dass ein Zwischenbereich (200c, 212c, 222c, 232c, 200bc) an zumindest einer von der Seitenwand (200s, 212, 222, 232) und der Bodenwand (200b, 213, 223, 233) weiter weg von dem Stapel (400) positioniert ist als beide Enden der zumindest einen von der Seitenwand (200s, 212, 222, 232) und der Bodenwand (200b, 213, 223, 233),
**dadurch gekennzeichnet, dass**
in einem Fall, in dem ein vorstehendes Ausmaß des Zwischenbereichs (200c, 200bc) der Seitenwand (200s) oder der Bodenwand (200b), das von einer imaginären Linie (P1, P2) in dem Querschnitt nach außen vorsteht, als ein vorstehendes Ausmaß δ mit maximaler Krümmung definiert ist und eine Länge der Seitewand (200s) in der senkrechten Richtung (H) oder eine Länge der Bodenwand (200b) in der waagrechten Richtung als eine Länge (HA1, HA2) definiert ist, ein Verhältnis des vorstehenden Ausmaßes δ mit maximaler Krümmung relativ zu der Länge (HA1, HA2) innerhalb eines Bereichs von 1 x 10⁻⁵ bis 1 x 10⁻¹ liegt, wobei die imaginäre Linie (P1, P2) imaginär eine Innenwandfläche an einem ersten Bereich der Seitenwand (200s) und eine Innenwandfläche an einem zweiten Bereich der Seitenwand (200s) entlang der senkrechten Richtung (H) verbindet oder imaginär eine Innenwandfläche an einem ersten Bereich der Bodenwand (200b) und eine Innenwandfläche an einem zweiten Bereich der Bodenwand (200b) entlang der waagrechten Richtung verbindet.

2. Brennstoffzellengerät nach Anspruch 1, wobei das Gehäuse (200) eine äußere Basisplatte (210) und eine innere Basisplatte (220B) aufweist, die zueinander in dem Querschnitt zugewandt sind,
wobei die äußere Basisplatte (210) und die innere Basisplatte (220B) einen von dem Kathodengasströmungsdurchgang (500) und dem Abgasströmungsdurchgang (600) ausbilden, und
wobei zumindest eine von der äußeren Basisplatte (210) und der inneren Basisplatte (220B) eine einzige gebogene Klaue (226) oder eine Vielzahl von gebogenen Klauen (226) aufweist, wobei die einzige gebogenen Klaue (226) oder die Vielzahl von gebogenen Klauen (226) an einem Rand (212u, 222u) der zumindest einen von der äußeren Basisplatte (210) und der inneren Basisplatte (220B) ausgebildet ist und an der zumindest einen von der äußeren Basisplatte (210) und der inneren Basisplatte (220B) gebogen ist, um eine Strömungsdurchgangsweite von einem von dem Kathodengasströmungsdurchgang (500) und dem Abgasströmungsdurchgang (600) zu definieren.

3. Brennstoffzellengerät nach Anspruch 1, wobei das Gehäuse (200) eine äußere Basisplatte (210) und eine innere Basisplatte (220B) aufweist, die zueinander in dem Querschnitt zugewandt sind,
wobei die äußere Basisplatte (210) und die innere Basisplatte (220B) einen von dem Kathodengasströmungsdurchgang (500) und dem Abgasströmungsdurchgang (600) ausbilden, und
wobei zumindest eine von der äußeren Basisplatte (210) und der inneren Basisplatte (220B) einen einzigen ausgebauchten Vorsprung (290B) oder eine Vielzahl von ausgebauchten Vorsprüngen (290B) aufweist, wobei der einzige ausgebauchte Vorsprung (290B) oder die Vielzahl von ausgebauchten Vorsprüngen (290B) an der zumindest einen von der äußeren Basisplatte (210) und der inneren Basisplatte (220B) ausgebildet ist, um eine Strömungsdurchgangsweite von einem von dem Kathodengasströmungsdurchgang (500) und dem Abgasströmungsdurchgang (600) zu definieren.

4. Brennstoffzellengerät nach Anspruch 1, wobei das Gehäuse (200) eine äußere Basisplatte (210) und eine innere Basisplatte (220B) aufweist, die zueinander in dem Querschnitt zugewandt sind,
wobei die äußere Basisplatte (210) und die innere Basisplatte (220B) einen von dem Kathodengasströmungsdurchgang (600) und dem Abgasströmungsdurchgang (600) ausbilden,
wobei zumindest eine von der äußeren Basisplatte (210) und der inneren Basisplatte (220B) eine einzige Verstärkungsrippe (228B), die in einer ausgebauchten Weise ausgebildet ist, oder eine Vielzahl von Verstärkungsrippen (228B) aufweist, die in einer ausgebauchten Weise ausgebildet sind.

5. Brennstoffzellengerät nach Anspruch 1, wobei das Gehäuse (200) eine äußere Basisplatte (210), eine mittlere Basisplatte (220) und eine innere Basisplatte (230) aufweist, die zueinander in dem Querschnitt zugewandt sind,
wobei die äußere Basisplatte (210) und die mittlere Basisplatte (220) einen von dem Kathodengasströmungsdurchgang (500) und dem Abgasströmungsdurchgang (600) ausbilden und die innere Basisplatte (230) und die mittlere Basisplatte (220) den anderen von dem Kathodengasströmungsdurchgang (500) und dem Abgasströmungsdurchgang (600) ausbilden,
wobei zumindest eine von der äußeren Basisplatte (210), der mittleren Basisplatte (220) und der inneren Basisplatte (230) eine einzige gebogene Klaue (226, 236) oder eine Vielzahl von gebogenen Klauen (226, 236) aufweist, wobei die einzige gebogenen Klaue (226, 236) oder die Vielzahl von gebogenen Klauen (226, 236) an einem Rand (212u, 222u, 232u) der zumindest einen von der äußeren Basisplatte (210), der mittleren Basisplatte (220) und der inneren Basisplatte (230) ausgebildet ist und an der zumindest einen von der äußeren Basisplatte (210), der mittleren Basisplatte (220) und der inneren Basisplatte (230) gebogen ist, um eine Strömungsdurchgangsweite (La, Lb) von einem von dem Kathodengasströmungsdurchgang (500) und dem Abgasströmungsdurchgang (600) zu definieren.

6. Brennstoffzellengerät nach Anspruch 2 oder 5, wobei die gebogene Klaue (226, 236) in dem Querschnitt zumindest eine von einer L-Form, einer U-Form, die waagrecht offen ist, einer O-Form, einer C-Form, einer M-Form, einer N-Form, einer P-Form, einer W-Form, einer V-Form, einer umgekehrte Form von einer von der L-Form, der U-Form, die waagrecht offen ist, der O-Form, der C-Form, der M-Form, der N-Form, der P-Form, der W-Form, der V-Form, und von einer Form aufweist, die einer von der L-Form, der U-Form, die waagrecht offen ist, der O-Form, der C-Form, der M-Form, der N-Form, der P-Form, der W-Form, der V-Form, und der umgekehrten Form von einer von der L-Form, der U-Form, die waagrecht offen ist, der O-Form, der C-Form, der M-Form, der N-Form, der P-Form, der W-Form, der V-Form, ähnelt.

7. Brennstoffzellengerät nach Anspruch 1, wobei das Gehäuse (200) eine äußere Basisplatte (210), eine mittlere Basisplatte (220) und eine innere Basisplatte (230) aufweist, die zueinander in dem Querschnitt zugewandt sind,
wobei die äußere Basisplatte (210) und die mittlere Basisplatte (220) einen von dem Kathodengasströmungsdurchgang (500) und dem Abgasströmungsdurchgang (600) ausbilden und die innere Basisplatte (230) und die mittlere Basisplatte (220) den anderen von dem Kathodengasströmungsdurchgang (500) und dem Abgasströmungsdurchgang (600) ausbilden, und
wobei zumindest eine von der äußeren Basisplatte (210), der mittleren Basisplatte (220) und der inneren Basisplatte (230) einen einzigen ausgebauchten Vorsprung (290) und eine Vielzahl von ausgebauchten Vorsprüngen (290) aufweist, wobei der einzige ausgebauchte Vorsprung (290) oder die Vielzahl von ausgebauchten Vorsprüngen (290) an der zumindest einen von der äußeren Basisplatte (210), der mittleren Basisplatte (220) und der inneren Basisplatte (230) ausgebildet ist, um eine Strömungsdurchgangsweite (La, Lb) von einem von dem Kathodengasströmungsdurchgang (500) und dem Abgasströmungsdurchgang (600) zu definieren.

8. Brennstoffzellengerät nach Anspruch 1, wobei das Gehäuse (200) eine äußere Basisplatte (210), eine mittlere Basisplatte (220) und eine innere Basisplatte (230) aufweist, die zueinander in dem Querschnitt zugewandt sind,
wobei die äußere Basisplatte (210) und die mittlere Basisplatte (220) einen von dem Kathodengasströmungsdurchgang (500) und dem Abgasströmungsdurchgang (600) ausbilden und die innere Basisplatte (230) und die mittlere Basisplatte (220) den anderen von dem Kathodengasströmungsdurchgang (500) und dem Abgasströmungsdurchgang (600) ausbilden, und
wobei zumindest eine von der äußeren Basisplatte (210), der mittleren Basisplatte (220) und der inneren Basisplatte (230) eine einzige Verstärkungsrippe (228, 238), die in einer ausgebauchten Weise ausgebildet ist, oder eine Vielzahl von Verstärkungsrippen (228, 238) aufweist, die in einer ausgebauchten Weise ausgebildet sind.

## Revendications

1. Appareil de pile à combustible, comprenant :
un empilement (400) auquel un gaz anodique et un gaz cathodique sont fournis et qui génère de l'électricité par le gaz anodique fourni et le gaz cathodique fourni ;
une couche d'isolation thermique (800) recouvrant une partie extérieure de l'empilement (400) ;
un passage d'écoulement de gaz cathodique (500) à travers lequel le gaz cathodique est fourni à l'empilement (400) ;
un passage d'écoulement de gaz d'échappement (600) à travers lequel un gaz d'échappement généré par une opération de génération de puissance de l'empilement (400) est déchargé à une partie extérieure de l'appareil de pile à combustible ;
un boîtier (200) faisant face à l'empilement (400) dans un état où la couche d'isolation thermique (800) est agencée entre le boîtier (200) et l'empilement (400), le boîtier (200) recevant l'empilement (400), la couche d'isolation thermique (800), le passage d'écoulement de gaz cathodique (500), et le passage d'écoulement de gaz d'échappement (600) et comportant une paroi latérale (200s, 212, 222, 232) et une paroi inférieure (200b, 213, 223, 233),
dans lequel au moins l'une de la paroi latérale (200s, 212, 222, 232) et de la paroi inférieure (200b, 213, 223, 233) dans une coupe transversale prise le long d'une direction verticale (H) du boîtier (200) ou d'une direction horizontale du boîtier (200) est formée pour être incurvée vers l'extérieur de sorte qu'une zone intermédiaire (200c, 212c, 222c, 232c, 200bc) au niveau d'au moins l'une de la paroi latérale (200s, 212, 222, 232) et de la paroi inférieure (200b, 213, 223, 233) soit positionnée plus éloignée de l'empilement (400) que des deux extrémités d'au moins l'une de la paroi latérale (200s, 212, 222, 232) et de la paroi inférieure (200b, 213, 223, 233),
**caractérisé en ce que**
dans le cas où une quantité en saillie de la zone intermédiaire (200c, 200bc) de la paroi latérale (200s) ou de la paroi inférieure (200b) faisant saillie vers l'extérieur depuis une ligne imaginaire (P1, P2) dans la coupe transversale est définie comme une quantité en saillie de courbure maximale [delta] et une longueur de la paroi latérale (200s) dans la direction verticale (H) ou une longueur de la paroi inférieure (200b) dans la direction horizontale est définie comme une longueur (HA1, HA2), un rapport de la quantité en saillie de courbure maximale [delta] par rapport à la longueur (HA1, HA2) se situe dans une plage de 1 x 10⁻⁵ à 1 x 10⁻¹, la ligne imaginaire (P1, P2) reliant de façon imaginaire une surface de paroi intérieure au niveau d'une première zone de la paroi latérale (200s) et une surface de paroi intérieure au niveau d'une deuxième zone de la paroi latérale (200s) le long de la direction verticale (H) ou reliant de façon imaginaire une surface de paroi intérieure au niveau d'une première zone de la paroi inférieure (200b) et une surface de paroi intérieure au niveau d'une deuxième zone de la paroi inférieure (200b) le long de la direction horizontale.

2. Appareil de pile à combustible selon la revendication 1, dans lequel le boîtier (200) comporte une plaque de base extérieure (210) et une plaque de base intérieure (220B) faisant face l'une à l'autre dans la coupe transversale,
dans lequel la plaque de base extérieure (210) et la plaque de base intérieure (220B) forment l'un du passage d'écoulement de gaz cathodique (500) et du passage d'écoulement de gaz d'échappement (600), et
dans lequel au moins l'une de la plaque de base extérieure (210) et de la plaque de base intérieure (220B) comporte un seul cliquet courbé (226) ou une pluralité de cliquets courbés (226), le seul cliquet courbé (226) ou la pluralité de cliquets courbés (226) étant formé(s) au niveau d'un bord (212u, 222u) d'au moins l'une de la plaque de base extérieure (210) et de la plaque de base intérieure (220B) et étant courbé (s) au niveau d'au moins l'une de la plaque de base extérieure (210) et de la plaque de base intérieure (220B) pour définir une largeur de passage d'écoulement de l'un du passage d'écoulement de gaz cathodique (500) et du passage d'écoulement de gaz d'échappement (600).

3. Appareil de pile à combustible selon la revendication 1, dans lequel le boîtier (200) comporte une plaque de base extérieure (210) et une plaque de base intérieure (220B) faisant face l'une à l'autre dans la coupe transversale,
dans lequel la plaque de base extérieure (210) et la plaque de base intérieure (220B) forment l'un du passage d'écoulement de gaz cathodique (500) et du passage d'écoulement de gaz d'échappement (600), et
dans lequel au moins l'une de la plaque de base extérieure (210) et de la plaque de base intérieure (220B) comporte une seule saillie bombée (290B) ou une pluralité de saillies bombées (290B), la seule saillie bombée (290B) ou la pluralité de saillies bombées (290B) étant formée(s) au niveau d'au moins l'une de la plaque de base extérieure (210) et de la plaque de base intérieure (220B) pour définir une largeur de passage d'écoulement de l'un du passage d'écoulement de gaz cathodique (500) et du passage d'écoulement de gaz d'échappement (600).

4. Appareil de pile à combustible selon la revendication 1, dans lequel le boîtier (200) comporte une plaque de base extérieure (210) et une plaque de base intérieure (220B) faisant face l'une à l'autre dans la coupe transversale,
dans lequel la plaque de base extérieure (210) et la plaque de base intérieure (220B) forment l'un du passage d'écoulement de gaz cathodique (600) et du passage d'écoulement de gaz d'échappement (600), et
dans lequel au moins l'une de la plaque de base extérieure (210) et de la plaque de base intérieure (220B) comporte une seule nervure de renforcement (228B) formée de manière bombée ou une pluralité de nervures de renforcement (228B) formées de manière bombée.

5. Appareil de pile à combustible selon la revendication 1, dans lequel le boîtier (200) comporte une plaque de base extérieure (210), une plaque de base intermédiaire (220), et une plaque de base intérieure (230) faisant face les unes aux autres dans la coupe transversale,
dans lequel la plaque de base extérieure (210) et la plaque de base intermédiaire (220) forment l'un du passage d'écoulement de gaz cathodique (500) et du passage d'écoulement de gaz d'échappement (600) et la plaque de base intérieure (230) et la plaque de base intermédiaire (220) forment l'autre du passage d'écoulement de gaz cathodique (500) et du passage d'écoulement de gaz d'échappement (600), et
dans lequel au moins l'une de la plaque de base extérieure (210), de la plaque de base intermédiaire (220) et de la plaque de base intérieure (230) comporte un seul cliquet courbé (226, 236) ou une pluralité de cliquets courbés (226, 236), le seul cliquet courbé (226, 236) ou la pluralité de cliquets courbés (226, 236) étant formé (s) au niveau d'un bord (212u, 222u, 232u) d'au moins l'une de la plaque de base extérieure (210), de la plaque de base intermédiaire (220), et de la plaque de base intérieure (230) et étant courbé(s) au niveau d'au moins l'une de la plaque de base extérieure (210), de la plaque de base intermédiaire (220), et de la plaque de base intérieure (230) pour définir une largeur de passage d'écoulement (La, Lb) de l'un du passage d'écoulement de gaz cathodique (500) et du passage d'écoulement de gaz d'échappement (600).

6. Appareil de pile à combustible selon la revendication 2 ou 5, dans lequel le cliquet courbé (226, 236) dans la coupe transversale comporte au moins l'une d'une forme en L, d'une forme en U ouverte horizontalement, d'une forme en 0, d'une forme en C, d'une forme en M, d'une forme en N, d'une forme en P, d'une forme en W, d'une forme en V, d'une forme inversée de l'une de la forme en L, de la forme en U ouverte horizontalement, de la forme en 0, de la forme en C, de la forme en M, de la forme en N, de la forme en P, de la forme en W, de la forme en V, et d'une forme qui ressemble à l'une de la forme en L, de la forme en U ouverte horizontalement, de la forme en 0, de la forme en C, de la forme en M, de la forme en N, de la forme en P, de la forme en W, de la forme en V et de la forme inversée de l'une de la forme en L, de la forme en U ouverte horizontalement, de la forme en 0, de la forme en C, de la forme en M, de la forme en N, de la forme en P, de la forme en W, de la forme en V.

7. Appareil de pile à combustible selon la revendication 1, dans lequel le boîtier (200) comporte une plaque de base extérieure (210), une plaque de base intermédiaire (220), et une plaque de base intérieure (230) faisant face les unes aux autres dans la coupe transversale,
dans lequel la plaque de base extérieure (210) et la plaque de base intermédiaire (220) forment l'un du passage d'écoulement de gaz cathodique (500) et du passage d'écoulement de gaz d'échappement (600) et la plaque de base intérieure (230) et la plaque de base intermédiaire (220) forment l'autre du passage d'écoulement de gaz cathodique (500) et du passage d'écoulement de gaz d'échappement (600), et
dans lequel au moins l'une de la plaque de base extérieure (210), de la plaque de base intermédiaire (220) et de la plaque de base intérieure (230) comporte une seule saillie bombée (290) ou une pluralité de saillies bombées (290), la seule saillie bombée (290) ou la pluralité de saillies bombées (290) étant formée(s) au niveau d'au moins l'une de la plaque de base extérieure (210), de la plaque de base intermédiaire (220), et de la plaque de base intérieure (230) pour définir une largeur de passage d'écoulement (La, Lb) de l'un du passage d'écoulement de gaz cathodique (500) et du passage d'écoulement de gaz d'échappement (600).

8. Appareil de pile à combustible selon la revendication 1, dans lequel le boîtier (200) comporte une plaque de base extérieure (210), une plaque de base intermédiaire (220), et une plaque de base intérieure (230) faisant face les unes aux autres dans la coupe transversale,
dans lequel la plaque de base extérieure (210) et la plaque de base intermédiaire (220) forment l'un du passage d'écoulement de gaz cathodique (500) et du passage d'écoulement de gaz d'échappement (600) et la plaque de base intérieure (230) et la plaque de base intermédiaire (220) forment l'autre du passage d'écoulement de gaz cathodique (500) et du passage d'écoulement de gaz d'échappement (600), et
dans lequel au moins l'une de la plaque de base extérieure (210), de la plaque de base intermédiaire (220) et de la plaque de base intérieure (230) comporte une seule nervure de renforcement (228, 238) formée de manière bombée ou une pluralité de nervures de renforcement (228, 238) formées de manière bombée.
